# EUROPÄISCHE PATENTSCHRIFT

(11) **EP 3 619 152 B1**
(45) Veröffentlichungstag und Bekanntmachung des Hinweises auf die Patenterteilung: **30.11.2022**
(21) Anmeldenummer: 18734470.0
(22) Anmeldetag: 14.06.2018
(51) Int. Cl.: B65H 29/66, B65H 29/24, B65H 29/68

(54) **VORRICHTUNG UND VERFAHREN ZUR BILDUNG EINES SCHUPPENSTROMS VON UNTERLAPPENDEN BÖGEN**
DEVICE AND METHOD FOR FORMING A SHINGLE STREAM OF UNDER- OR OVERLAPPING SHEETS
DISPOSITIF ET PROCÉDÉ DE FORMATION D'UN FLUX IMBRIQUÉ DE FEUILLES SE CHEVAUCHANT PAR LE HAUT OU PAR LE BAS

(30) Priorität: 14.06.2017 DE 102017005661; 09.05.2018 DE 102018111190
(43) Veröffentlichungstag der Anmeldung: 11.03.2020
(73) Patentinhaber: BW Papersystems Stuttgart GmbH, 72622 Nürtingen (DE)
(72) Erfinder: SCHILLING, Andreas, 72805 Lichtenstein (DE); KLEIN, Hansjörg, 73773 Aichwald (DE)
(74) Vertreter: Schleitzer, Dirk-Karsten
(86) Internationale Anmeldenummer: PCT/EP2018/065827
(87) Internationale Veröffentlichungsnummer: WO 2018/229201

(56) Entgegenhaltungen:
- US-A- 3 730 515
- US-A- 5 275 394
- US-A- 5 950 510
- US-A1- 2010 044 946

## Beschreibung

Die Erfindung betrifft eine Vorrichtung, insbesondere einen sogenannten Rollenquerschneider, zur Bildung eines Schuppenstroms von unter- oder überlappenden Bögen, insbesondere von Papier- oder Kartonbögen, mit einer Transporteinrichtung zum Transport von Bögen, mit einer Schuppeinrichtung zur bereichsweisen Unter- oder Überlappung der Bögen, mit einer in Transportrichtung der Bögen der Schuppeinrichtung nachfolgenden Bremseinrichtung zum Abbremsen von geschuppten Bögen, insbesondere durch Ausbildung eines Bremsspaltes für den Durchlauf von geschuppt zusammengeführten Bögen, und, vorzugsweise, mit einer in Transportrichtung vor der Schuppeinrichtung angeordneten Querschneideeinrichtung zum Schneiden eines Materialbandes in einzelne Bögen. Darüber hinaus betrifft die Erfindung ein Verfahren zur Bildung eines Schuppenstroms von unter- oder überlappenden Bögen, insbesondere von Folien, Papier- oder Kartonbögen, weiter insbesondere zur Bildung eines Schuppenstroms von mit einem Querschneider aus einem Materialband geschnittenen einzelnen Bögen, wobei vereinzelte Bögen zu einer Schuppeinrichtung transportiert und bereichsweise unter- oder überlappend werden, um einen Schuppenstrom zu erzeugen, und wobei die geschuppten Bögen mit einer in Transportrichtung der Bögen der Schuppeinrichtung nachfolgenden Bremseinrichtung abgebremst werden.

Ein Rollenquerschneider ist beispielsweise aus der DE 101 03 040 A1 bekannt. Mit dem bekannten Rollenquerschneider können Papier- oder Kartonbögen als quasi endloses Band in Form einer Papierrolle bereitgestellt werden. Mit Hilfe einer Zuführeinrichtung mit Rollen oder Walzen wird das Band einer Querschneideeinrichtung zugeführt und dort in Bögen mit definierter Länge geschnitten. Häufig ist der Zuführeinrichtung ein Papierspeicher vorgeschaltet, um eine bestimmte Bahnlänge des Papiers vorzuhalten. Die geschnittenen Bögen werden mit Hilfe von schnell laufenden Transportbändern einer Schuppeinrichtung zur Bildung einer Unterlappung der Bögen zugeführt. Die Schuppeinrichtung beinhaltet eine Anhebewelle und ein darüber angeordnetes Saugband. Die durch die Schuppeinrichtung laufenden Bögen werden an einer definierten Stelle der Bögen, insbesondere bezogen auf die Hinterkante der Bögen, von der Anhebewelle gegenüber der Transportebene angehoben und an das darüber angeordnete Saugband gedrückt. Das Saugband weist eine geringere Umlaufgeschwindigkeit als die schnell laufenden Transportbänder auf, die die Bögen von der Querschneideeinrichtung weiter transportieren. Dadurch wird der Bogen abgebremst. Die Schuppeinrichtung wirkt hierbei als erste, hintere Bremseinheit. Der nachfolgende Bogen weist also eine höhere Geschwindigkeit auf als der hochgeschlagene vorlaufende Bogen. Durch die Geschwindigkeitsdifferenz kommt es zu einer Unterlappung der Bögen. Auf diese Weise wird ein kontinuierlicher Schuppenstrom erzeugt. Mit dem nächsten Takt der Schuppeinrichtung wird der nachlaufende Bogen von der Schlägerwelle erfasst, gegen das Saugband gedrückt und abgebremst. Jeder Bogen verbleibt länger als einen Takt im Eingriff des Saugbandes.

Der Schuppeinrichtung ist in Transportrichtung des Schuppenstroms eine Bremseinrichtung als zweite, vordere Bremseinheit nachgeordnet. Eine solche Bremseinrichtung ist beispielsweise in der DE 38 12 685 A1 beschrieben. Die Bremseinrichtung kann wenigstens eine sogenannte Nipprolle aufweisen, die zusammen mit einem Transportband, einer weiteren Rolle oder Walze einen Bremsspalt bildet. Der Abstand zwischen der Bremseinrichtung und der Schuppeinrichtung ist so eingestellt, dass die Bogenvorderkante eines Bogens vorzugsweise gerade in den Bremsspalt einläuft und verzögert wird, wenn der hintere Bogenbereich, insbesondere die Hinterkante des Bogens, von der Anhebewelle der Schuppeinrichtung an das Saugband gedrückt wird, Der Bogen wird auf diese Weise vorzugsweise ungefähr zeitgleich von der Nipprolle im vorderen Bogenbereich und von dem Saugband der Schuppeinrichtung im hinteren Bogenbereich abgebremst bzw. verzögert. Dadurch wird eine Wellenbildung des Bogens beim Abbremsen verhindert. Im Anschluss an die Bremseinrichtung wird der durch die unterlappenden Bögen gebildete unterschuppte Bogenstrom mit gleicher Geschwindigkeit und gleicher Schuppenlänge der unterlappenden Bögen auf einem Übergabetisch mit langsamer laufenden Transportbändern zu einer weiterverarbeitenden Maschine weitertransportiert.

Die Bögen werden, wie im vorangehenden Absatz beschrieben, etwa zeitgleich an ihrer Vorder- und Hinterkante abgebremst. Ein durchhängender vorlaufender Bogen kann den nachfolgenden Bogen in seiner Vorwärtsbewegung während des Unterlappens behindern, was zu Problemen bei der Positioniergenauigkeit führen kann. Die Bögen werden nach dem Hochdrücken durch die Schlägerwelle gegen das Saugband zwischen dem Saugband und der Bremseinrichtung gespannt, um ein Durchhängen der Bögen zu verhindern. Die Spannung der Bögen wird realisiert, indem die Geschwindigkeit des Saugbandes etwas geringer als die Geschwindigkeit der Nipprollen der Bremseinrichtung eingestellt wird, Aufgrund der Zugkräfte, die durch die Geschwindigkeitsdifferenz zwischen den Nipprollen und dem Saugband auf den Bogen ausgeübt werden, wird der Bogen gespannt und das Durchhängen verringert. Fährt der vorlaufende Bogen aus dem Eingriffsbereich des Saugbandes, wird dieser nicht mehr von dem Saugband gehalten. Der vorlaufende Bogen wird dann nur noch von dem nachlaufenden Bogen gehalten, der sich (noch) im Eingriffsbereich des Saugbandes befindet. Da mit zunehmender Bogenlänge das Gewicht des vorlaufenden Bogens steigt, welches von dem nachlaufenden Bogen getragen werden muss, steigt bei großen Bogenformaten die Gefahr des Durchhängens der Bögen.

In Transportrichtung des Schuppenstroms ist ein Übergabepunkt vorgesehen, an dem die einzelnen Bögen nachfolgend von einer Übernahmeeinrichtung der weiterverarbeitenden Maschine oder von der weiterverarbeitenden Maschine selbst ergriffen bzw. erfasst und so an die weiterverarbeitende Maschine übergeben werden, Der Übergabepunkt liegt in der Regel in Bogentransportrichtung hinter dem Ende des Übergabetisches. Für die störungsfreie Weiterverarbeitung müssen die einzelnen Bögen zu einem bestimmten Zeitpunkt am Übergabepunkt bereitgestellt werden, das heißt, die Bögen müssen den Übergabepunkt bezogen auf die Vorderkante zu einem bestimmten Zeitpunkt und mit der Taktfrequenz der Übernahmeeinrichtung der weiterverarbeitenden Maschine, erreichen. Die Phasenlage und Taktfrequenz der weiterverarbeitenden Maschine bestimmen damit die Taktfrequenz und die Phasenlage der gesamten Vorrichtung. Als Takt wird dabei die Zeitdauer zwischen dem Greifen der Vorderkante eines ersten Bogens und dem Greifen der Vorderkante eines Zweiten Bogens von der weiterverarbeitenden Maschine bezeichnet. Somit müssen sowohl die Schuppeinrichtung als auch die Querschneidereinrichtung mit demselben Takt wie die weiterverarbeitende Maschine arbeiten. Die Phasenlage beschreibt beispielsweise die relative Position eines Messers der Querschneideeinrichtung, einer Anhebewelle der Schuppeinrichtung und einer Übernahmeeinrichtung der weiterverarbeitenden Maschine. Die Phasenlage bleibt während des Betriebes gleich, ändert sich aber bei einem Wechsel des Bogenformates. Die Taktfrequenz der weiterverarbeitenden Maschine ist üblicherweise für alle Bogenformate gleich.

Die Bögen werden von der weiterverarbeitenden Maschine mit einer definierten Geschwindigkeit von dem Rollenquerschneider übernommen und mit dieser Geschwindigkeit weiter gefördert. Da die Bögen nur einer gewissen Beschleunigung ausgesetzt sein dürfen, müssen die Bögen nach Möglichkeit mit derselben Geschwindigkeit der weiterverarbeitenden Maschine am Übergabepunkt bereitgestellt werden. Die Bögen müssen also nicht nur zu einem bestimmten Zeitpunkt, sondern auch mit einer definierten Geschwindigkeit am Übergabepunkt bereitgestellt werden.

Die Bremseinrichtung des Rollenquerschneiders ist schnittlängenabhängig verstellbar. Wird das Bogenformat, d.h die Länge des Bogens, geändert, muss der Abstand zwischen der Bremseinrichtung und der Schuppeinrichtung entsprechend angepasst werden, indem die Bremseinrichtung in oder entgegen der Transportrichtung der Bögen verstellt wird. Die Nipprolle wird dazu in Transportrichtung der Bögen vorzugsweise derart relativ zur Schuppeinrichtung verstellt, dass die Vorderkante eines Bogens gerade in den Bremsspalt einläuft und verzögert wird, wenn der hintere Bogenbereich von der Anhebewelle an das Saugband gedrückt wird. Durch das Verstellen der Bremseinrichtung wird so sichergestellt, dass die Bögen vorzugsweise im Wesentlichen gleichzeitig am vorderen und hinteren Kantenbereich des jeweiligen Bogens abgebremst bzw. verzögert werden.

Die Taktfrequenz und die Phasenlagen von Bogentransport, Schuppenbildung und Schneiden der Papierbahn, das heißt das periodische Ankommen der Vorderkante eines Bogens des Schuppenstroms am Übergabepunkt zur weiterverarbeitenden Maschine, das periodische Hochschlagen der Hinterkante eines vorlaufenden Bogens in der Schuppeinrichtung und das periodische Schneiden des Bandes in Bögen mit der Querschneideeinrichtung, müssen auf die Phasenlage und Taktfrequenz der weiterverarbeitenden Maschine abgestimmt sein. Um die störungsfreie Übergabe der Bögen an die weiterverarbeitende Maschine zu gewährleisten, müssen die Bögen zu einem bestimmten Zeitpunkt mit einem angeforderten Geschwindigkeitsprofil an dem Übergabepunkt ankommen, das heißt mit einer bestimmten Taktfrequenz. Werden die Bögen am Übergabepunkt mit einer gleichbleibenden Taktfrequenz und einer gleichbleibenden Transportgeschwindigkeit bereitgestellt, weisen alle am Übergabepunkt ankommenden Bogenvorderkanten den gleichen Abstand zur jeweils nachlaufenden Bogenvorderkante auf. Das bedeutet, dass die Bögen mit einer konstanten Überlappungslänge am Übergabepunkt bereitgestellt werden. Die Überlappungslänge soll vorzugsweise so angepasst werden, dass der Abstand zwischen der Nipprolle und dem Übergabepunkt ein ganzzahliges Vielfaches der Überlappungslänge ergibt, damit jeweils ein Bogen am Übergabepunkt bereitgestellt wird, wenn zeitgleich ein nachfolgender Bogen mit seiner Vorderkante von der Bremseinrichtung abgebremst wird und mit seiner hochgeschlagenen Hinterkante am Saugband der Schuppeinrichtung gehalten wird.

Ist ein Bogen gerade mit seiner Hinterkante hochgeschlagen und abgebremst worden, kann der nachlaufende Bogen unter den vorlaufenden Bogen gefördert werden. Dieser Zeitpunkt stellt einen optimalen Stopppunkt der Vorrichtung dar, da der nachlaufende, schnelle Bogen unter den langsamen vorlaufenden Bogen gefördert werden kann. Somit ist es möglich, die schnell laufenden Transportbänder langsamer als die langsam laufenden Bänder abzubremsen, da die Bogenlänge als zusätzlicher Bremsweg des nachlaufenden Bogens genutzt werden kann, Die schnell laufenden Bänder genauso schnell abzubremsen wie die langsam laufenden Bänder, ist dagegen aufwendig und mit hohem Verschleiß verbunden. Bei einem starken Abbremsen können zudem die Bögen auf den schnell laufenden Bändern verrutschen, was unbedingt verhindert werden muss, da die Bögen sonst nicht mehr in der richtigen Phasenlage sind, das heißt die Bögen befinden sich nicht mehr zum richtigen Zeitpunkt am vorgesehenen Ort der Vorrichtung.

Wird bei einem Formatwechsel die Bremseinrichtung relativ zur Schuppeinrichtung verstellt, führt dies zwangsläufig auch zu einer Veränderung des Abstandes zwischen der Bremseinrichtung und dem Übergabepunkt zur weiterverarbeitenden Maschine bzw. zu einer Veränderung der Übergabelänge. Um das störungsfreie Anhalten der Vorrichtung zu gewährleisten, muss daher bei einem Formatwechsel und damit einer Veränderung der Übergabelänge die Überlappungslänge der Bögen im Schuppenstrom verändert werden, um die Forderung zu erfüllen, dass die Übergabelänge einem ganzzahligen Vielfachen der Überlappungslänge entspricht. Die Überlappungslänge wird dabei durch die Differenz der schnell und langsam laufenden Trabsportbänder bestimmt.

Bei einem Formatwechsel müssen also die Geschwindigkeiten der schnell und langsam laufenden Bänder derart angepasst werden, dass die Übergabelänge einem ganzzahligen Vielfachen der Überlappungslänge entspricht. Da die Bögen von der weiterverarbeitenden Maschine mit einer definierten Geschwindigkeit ergriffen und gefördert werden, darf die Geschwindigkeit, mit der die Bögen am Übergabepunkt angeliefert werden, nicht zu stark von der Geschwindigkeit der weiterverarbeitenden Maschine abweichen, damit eine Beschädigung oder ein Verrutschen der Bögen aufgrund zu großer Beschleunigungen verhindert wird. Die Geschwindigkeit der langsam laufenden Bänder kann also nur in einem beschränkten Rahmen angepasst werden.

Das Einstellen einer geeigneten Überlappungslänge ist sehr aufwendig, da nicht nur der bisher beschriebene Abstand zwischen der Niprolle und dem Übergabepunkt sowie die Geschwindigkeitsabweichung der langsam laufenden Bänder von der Fördergeschwindigkeit der weiterverarbeitenden Maschine berücksichtigt werden muss. Zusätzlich muss verhindert werden, dass die Vorrichtung dann angehalten wird, wenn sich die Messer der Querschneideeinrichtung gerade im Eingriff befinden und somit im Schnitt liegen. Es kann der Fall eintreten, dass bei einem veränderten Bogenformat die Messer der Querschneideeinrichtung grade im Schnitt liegen, wenn die weiterverarbeitende Maschine gestoppt wird. Der grade geschnittene Bogen kann hierdurch ebenso wie die Materialbahn beschädigt werden, wodurch der gesamte Prozess gestört werden kann oder eine aufwändige manuelle Entnahme des beschädigten Bogens und/oder des Bahnbereichs notwendig wird, Ein Anhalten der weiterverarbeitenden Maschine, während sich die Messer der Querschneideeinrichtung gerade im Schnitt befinden, muss also unter allen Umständen vermieden werden. Für jedes Bogenformat muss eine Konstellation gefunden werden, bei der es bei einem Stopp der weiterverarbeitenden Maschine nicht dazu kommt, dass die Messer der Querschneidereinrichtung im Schnitt liegen.

In einem solchen Fall kann beispielsweise die Geschwindigkeit der schnell laufenden Bänder verändert werden. Eine Veränderung der Geschwindigkeit der schnell laufenden Bänder ist gekoppelt an eine Verschiebung der Phasenlage der Messer der Querschneideeinrichtung, Gleichzeitig muss auch die Geschwindigkeit der langsam laufenden Bänder geändert werden, damit die Übergabelänge einem ganzzahligen Vielfachen der Überlappungslänge entspricht. Dies führt dazu, dass die Bögen am Übergabepunkt mit einer Geschwindigkeit angeliefert werden, die von der Geschwindigkeit der weiterverarbeitenden Maschine abweicht. Das Bereitstellen der Bögen mit einer nicht optimalen Geschwindigkeit am Übergabepunkt führt dazu, dass die Bögen bei der Übergabe an die weiterverarbeitende Maschine beschleunigt oder verzögert werden müssen. Ist die Abweichung der Geschwindigkeit der langsam laufenden Bänder zu groß, kann eine störungsfreie Übergabe der Bögen an die weiterverarbeitende Maschine nicht mehr stattfinden. in einem solchen Fall muss die Überlappungslänge geändert werden, damit die langsam laufenden Bänder mit einer Geschwindigkeit betrieben werden, die eine störungsfreie Übergabe der Bögen an die weiterverarbeitende Maschine ermöglicht.

Bei einem Formatwechsel bzw. dem Einstellen der Vorrichtung auf ein bestimmtes Format müssen also eine Vielzahl von Randbedingungen beachtet werden. Als übergeordnete Bedingung muss verhindert werden, dass ein Stopp der Vorrichtung erfolgt, wenn sich die Messer der Querschneideeinrichtung gerade im Eingriff befinden. Gleichzeitig muss die Geschwindigkeit der langsam laufenden Bänder derart eingestellt sein, dass eine störungsfreie Übergabe der Bögen an die weiterverarbeitende Maschine gewährleistet ist. Zusätzlich soll die übergabelänge nach Möglichkeit einem ganzzahligen Vielfachen der Überlappungslänge entsprechen. Die vorgenannten Bedingungen werden letzten Endes von den gewählten Geschwindigkeiten der schnell und langsam laufenden Bändern sowie dem Abstand zwischen der Bremseinrichtung und der Schuppeinrichtung beeinflusst. Aufgrund der Vielzahl der Bedingungen, ist es nicht möglich, für jedes Bogenformat alle Bedingungen zu erfüllen. Für jedes Bogenformat kann somit lediglich ein Kompromiss zwischen der Überlappungslänge, den Geschwindigkeiten der schnell und langsam laufenden Bändern gefunden werden, bei dem die Randbedingungen, Verhinderung eines Stopps der Messer der Querschneideeinrichtung im Eingriff und störungsfreie Übergabe der Bögen an die weiterverarbeitende Maschine, noch erfüllt werden können.

Der Betrieb der Vorrichtung bei nicht optimalen Bedingungen, das heißt, dass die Übergabelänge nicht einem ganzzahligen Vielfachen der Überlappungslänge entspricht und/oder die Geschwindigkeit der langsam laufenden Transportbänder nicht optimal an die weiterverarbeitende Maschine angepasst ist, führt dazu, dass die Vorderkanten der Bögen bei einem Stopp der Maschine abhängig vom Bogenformat jeweils eine unterschiedliche Position aufweisen, Lediglich der erste, vorlaufende Bogen kommt mit seiner Vorderkante am Übergabepunkt bei einem Stopp der Vorrichtung formatunabhängig immer in der gleichen definierten Lage zum Stehen. Die schnell und langsam laufenden Bänder müssen bei einem Stopp der Vorrichtung gleichzeitig zum Stillstand kommen, da ansonsten die Phasenlage der Bögen zueinander verändert werden könnte, insbesondere zwischen den Bögen, die sich im Eingriff der langsam laufenden Bänder befinden, und den Bögen, die sich im Eingriff der schnell laufenden Bänder befinden.

Aus der US 5,275,394 A ist ein Rollenquerschneider zur Bildung einer Folge von sich unterlappenden Bögen bekannt, wobei die Bögen einem Bogenanleger zugeführt werden. In dem Bogenanleger werden die Bögen gestapelt und können bedarfsweise einer bogenverarbeitenden Maschine taktweise zugeführt werden. Nachteilig ist hierbei die Notwendigkeit, einen Bogenanleger zwischen zu schalten, der als Puffer für die Bögen dient.

In der US 3,370,515 A ist ein Rollenquerschneider mit einem Übergabetisch beschrieben. Der Übergabetisch kann abgesenkt und unter die Schuppeinrichtung geschoben werden.

Aus der US 2010/044946 A1 ist ein Rollenquerschneider bekannt, wobei der Rollenquerschneider einen Rahmen aufweist, auf dem ein Querschneider, eine Schuppeinrichtung und eine Bremseinrichtung angeordnet sind. Der Rahmen ist dabei auf Rollen gelagert und kann senkrecht zur Transportrichtung der Bögen verschoben werden,

Ein schnelles Abbremsen der langsam laufenden Bänder ist eher unproblematisch. Ein schnelles Abbremsen der schnell laufenden Bänder führt jedoch zu einer hohen Materialbeanspruchung und ist technisch aufwendig. Das schnelle Abbremsen führt nicht nur zu einem erhöhten Verschleiß der schnell laufenden Bänder und deren Bremseinrichtungen, sondern auch zu einem erhöhten Energieverbrauch. Um die schnell laufenden Bänder und Bögen schnell anhalten zu können, wird deutlich mehr Energie benötigt als beim Abbremsen der langsam laufenden Bänder. Bei einem abrupten Stopp der schnell laufenden Bänder drohen die Bögen aufgrund der Massenträgheit weiter zu rutschen. Da ein verrutschter Bogen nicht mehr die richtige Phasenlage in der Vorrichtung bezogen auf die Funktionseinheiten der Vorrichtung, insbesondere der Bremseinrichtung und Schuppeinrichtung, aufweist, muss ein Verrutschen der Bögen vermieden werden. Deshalb wird das Abbremsen der Bögen in der Regel von schaltbaren zusätzlichen Bremseinheiten, beispielsweise von Blas- und/oder Saugluft, unterstützt. Durch die weiteren Bremseinheiten wird der Energiebedarf beim Abbremsen der schnell laufenden Bänder zusätzlich erhöht.

Aufgabe der vorliegenden Erfindung ist es, eine Vorrichtung und ein Verfahren jeweils der eingangs genannten Art zur Verfügung zu stellen, die einen wenig aufwendigen Wechsel des Bogenformates und einen verfahrenstechnisch einfachen Systemstopp zulassen, wobei insbesondere ungünstige Betriebszustände bei einem Systemstopp, wie das Anhalten der Querschneideeinrichtung im Schnitt, verhindert werden sollen. Darüber hinaus soll die Vorrichtung sowie das Verfahren einen materialschonenden und energiesparenden Systemstopp ermöglichen.

Die vorgenannte Aufgabe wird bei einer Vorrichtung der eingangs genannten Art erfindungsgemäß dadurch gelöst, dass die Schuppeinrichtung in und/oder entgegen der Transportrichtung der Bögen schnittlängenabhängig verstellbar ausgebildet ist, "Schnittlängenabhängig" bezieht sich auf eine Änderung der Anordnung der Schuppeinrichtung relativ zum Querschneider und, vorzugsweise, relativ zur Bremseinrichtung, für einen Formatwechsel des Bogenformats. Bei dem erfindungsgemäßen Verfahren ist dementsprechend vorgesehen, dass die Schuppeinrichtung bei einer Änderung der Schnittlänge der Bögen bzw. bei einem Wechsel des Bogenformats in oder entgegen der Transportrichtung der Bögen verstellt wird.

Der Erfindung liegt der Grundgedanke zugrunde, die Schuppeinrichtung in Abhängigkeit von der aktuellen (neuen) Bogenlänge und insbesondere relativ zu der der Schuppeinrichtung unmittelbar nachfolgenden Bremseinrichtung in oder entgegen der Transportrichtung der Bögen zu verfahren, versetzen oder zu verschieben, so dass bei jeder einstellbaren Bogenlänge ein vorlaufender Bogen ungefähr gleichzeitig vorne von der Bremseinrichtung und hinten von der Schuppeinrichtung gebremst wird. Insbesondere ermöglichst es die Erfindung damit, den Abstand zwischen dem Übergabepunkt und der Bremseinrichtung bzw. die Übergabelänge bei einem Formatwechsel konstant zu halten, wobei die Bremseinrichtung bei einem Formatwechsel vorzugsweise nicht verstellt wird. Stattdessen wird der Abstand zwischen der vorzugsweise ortsfest angeordneten Bremseinrichtung und der Schuppeinrichtung durch Verstellen der Schuppeinrichtung an die tatsächliche Schnittlänge angepasst, das heißt, über das Maß einer Feinjustierung hinaus verändert.

So kann der Abstand zwischen dem vorderen Übergabepunkt der vereinzelten Bögen an eine Bogenverarbeitungsmaschine und der Bremseinrichtung bzw. die Übergabelänge für unterschiedliche Formate bzw. Schnittlängen gleichbleiben, was zu einer erheblichen Vereinfachung bei der Einstellung der erfindungsgemäßen Vorrichtung auf ein anderes Bogenformat führt. Insbesondere entfällt bei gleichbleibender Übergabelänge die Notwendigkeit, die Überlappungslänge der Bögen im Schuppenstrom bei einem Formatwechsel zu verändern. Da die Überlappungslänge für alle Bogenformate unveränderlich bleibt, kann die Geschwindigkeit der langsam laufenden Transportbänder für alle Bogenformate gleich gehalten werden. Somit muss lediglich die Geschwindigkeit der schnell laufenden Transportbänder und die Phasenlage der Messer der Querschneidereinrichtung und des Anhebemittels der Schuppeinrichtung an das neue Bogenformat angepasst werden. Die Geschwindigkeit der langsam laufenden Bänder entspricht also immer der Geschwindigkeit mit der die Bögen von der weiterverarbeitenden Maschine übernommen und weitertransportiert werden,

Bei gleichem Abstand zwischen dem vorderen Übergabepunkt und der Bremseinrichtung, also den Nipprollen, und bei gleicher Überlappungslänge der Bögen im Schuppenstrom, wobei die Übergabelänge einem ganzzahligen Vielfachen der Überlappungslänge entspricht, ist bei einem Systemstopp, wenn sich die Vorderkante eines vorlaufenden Bogens am Übergabepunkt befindet, sichergestellt, dass die Vorderkante eines nachlaufenden Bogens gerade von der Bremseinrichtung abgebremst und die Hinterkante dieses Bogens von der Schuppeinrichtung aus den Bogenstrom bewegt, d.h. angehoben oder abgesenkt, wird. Dies lässt es zu, die schnell laufenden Bänder ungleich zu den langsam laufenden Bändern abzubremsen, da stets sichergestellt ist, dass ein weiter nachlaufender Bogen mit seiner Vorderkante unter oder über den von der Schuppeinrichtung aus dem Bogenstrom bewegten, d.h. angehobenen oder abgesenkten, in Transportrichtung vorlaufenden Bogen transportiert werden kann. Die Bogenlänge bzw. der Abstand zwischen der Schuppeinrichtung und der Bremseinrichtung dient dabei als Puffer für den nachlaufenden Bogen. Unabhängig vom Bogenformat ist somit sichergestellt, dass der nachlaufende Bogen unter oder über den vorlaufenden Bogen gefördert werden kann.

Bei einem Stopp der weiterverarbeitenden Maschine liegt somit für jedes Bogenformat eine gleiche, definierte Stoppposition vor. Das bedeutet, dass die Bogenvorderkanten der Bögen, die sich zwischen dem Übergabepunkt und der Bremseinrichtung befinden, für jedes Bogenformat die gleichen Positionen bei einem Stopp aufweisen. Gleichzeitig befindet sich zwischen dem Übergabepunkt und der Bremseinrichtung die gleiche Anzahl von Schuppen, das heißt, die gleiche Anzahl von Bögen bei einem Systemstopp. Die schnell laufenden Bänder können aufgrund des Puffers zwischen dem vorlaufenden, hochgeschlagenen Bogen und dem nachlaufenden Bogen verzögert zu den langsam laufenden Bändern gestoppt werden, so dass ein Stopp, während sich die Messer der Querschneideeinrichtung im Schnitt befinden, für jedes Bogenformat wirkungsvoll verhindert werden kann. Die Vorrichtung ist somit in der Lage die schnell laufenden Bänder in Abängigkeit von der Position der Messer der Querschneideeinrichtung derart anzuhalten, dass sich die Messer der Querschneideeinrichtung gerade nicht im Schnitt befinden. Dies wird ermöglicht, indem die schnell laufenden Bänder und die Querschneideeinrichtung mit einer kurzen zeitlichen Verzögerung im Vergleich zu den langsam laufenden Bändern gestoppt werden.

Die Vorrichtung ist somit in der Lage die schnell und langsam laufenden Bänder bei einem Systemstopp derart abzubremsen, dass sich die Bänder bzw. die von den Bändern transportierten Bögen nicht mehr in einer zusammenpassenden Phasenlage befinden. Bei einem Wiederanfahren der Vorrichtung können die langsam laufenden Bänder zeitlich kurz vor den schnell laufenden Bändern angefahren werden, wodurch die richtige Phasenlage in der Vorrichtung wiederhergestellt wird. Ein Systemstopp sowie ein anschließender Systemstart sind also in einfacher Weise und in kurzer Zeit möglich.

Die Materialbeanspruchung der schnell laufenden Bänder und ihren Bremseinheiten kann durch ein unterschiedlich starkes Abbremsen der schnell und langsam laufenden Bändern verringert werden. Gleichzeitig wird der Energiebedarf beim Abbremsen der schnell laufenden Bänder verringert. Da die Gefahr eines unkontrollierten Verrutschens eines Bogens durch das verringerte Abbremsen minimiert wird, muss das Abbremsen der Bögen weniger stark oder gar nicht mehr durch zusätzliche Bremseinheiten unterstützt werden, Hierdurch kann der Energiebedarf bei einem Systemstopp weiter reduziert werden.

Die Schuppeinrichtung der erfindungsgemäßen Vorrichtung kann vorzugsweise zur Unterlappung der von der Querschneideeinrichtung kommenden Bögen ausgebildet sein. Der unterlappende Schuppenstrom kann dann beispielsweise in einer Druckmaschine weiterverarbeitet werden. Schuppeinrichtungen zur Erzeugung eines unterlappenden Schuppenstroms sind dem Fachmann grundsätzlich bekannt, beispielsweise aus der DE 101 03 040 A1 oder der DE 101 19 408 A1. Grundsätzlich kann die Schuppeinrichtung aber auch zur Überlappung der von der Querschneideeinrichtung kommenden Bögen des Bogenstroms ausgebildet sein. Eine Schuppeinrichtung zur Erzeugung eines überlappenden Schuppenstroms wird beispielsweise in der EP 1 976 789 B1 beschrieben, Der überlappende Schuppenstrom kann in einer Stapeleinrichtung weiterverarbeitet werden. Sowohl bei einer Überlappung als auch bei einer Unterlappung spricht man von einer Überlappungslänge, die den Abstand von der Vorderkante des vorlaufenden zu der Vorderkante des unmittelbar nachlaufenden, geschuppten Bogens angibt.

Die Schuppeinrichtung kann eine Verzögerungseinheit zum Abbremsen der Bögen und eine Anhebeeinheit zur Unterlappung der Bögen oder eine Verzögerungseinheit und eine Niederdrückeinheit zur Überlappung der Bögen aufweisen. Mit einer Anhebeeinheit kann ein vorlaufender Bogen im Bogenstrom vorzugsweise im Bereich der Hinterkante an eine über der Anhebeeinheit angeordnete Verzögerungseinheit gedrückt werden kann. Die Verzögerungseinheit und die Anhebeeinheit können als separate Baugruppen ausgebildet sein, die funktional zusammenwirken. Die Anhebeeinheit kann beispielsweise eine Schlägerwelle aufweisen, die einen exzentrischen Schläger führt, der durch die Rotation der Schlägerwelle den Bogen insbesondere im Bereich der Hinterkante anhebt und an die oberhalb der Schlägerwelle angeordnete Verzögerungseinheit drückt. Die Verzögerungseinheit, beispielsweise ausgebildet durch ein mit Löchern versehenes Transportband, das zusammen mit einem Saugkasten ein Saugband bildet, verzögert die Bewegung des hochgedrückten Bogens. Da das Transportband eine geringere Transportgeschwindigkeit aufweist als das schnell laufende Transportband, mit dem die Bögen von der Querschneideeinrichtung zur Schuppeinrichtung und weiter transportiert werden, werden die Bögen durch die Verzögerungseinheit abgebremst und mit einer geringeren Geschwindigkeit als der nachfolgende Bogen in Transportrichtung weiterbefördert. Der nachlaufende Bogen, der noch auf dem schnell laufenden Transportband aufliegt, weist eine höhere Geschwindigkeit auf und wird so unter oder über den vorherlaufenden Bogen gefördert. Auf diese Weise wird eine auf die Hinterkante der Bögen bezogene Unter- oder Überlappung eines kontinuierlichen Schuppenstroms erzeugt. Mit dem nächsten Takt der Schuppeinrichtung wird der nachlaufende Bogen von der Schlägerwelle erfasst, gegen das Saugband gedrückt und abgebremst. Jeder Bogen verbleibt länger als einen Takt im Eingriff des Saugbandes. Verlässt der vorlaufende Bogen bei einer Unterlappung den Einflussbereich des Saugbandes, so wird der vorlaufende Bogen von dem nachlaufenden Bogen, der sich im Eingriffsbereich des Saugbandes befindet, weiterhin hochgehalten. Um das Anheben des vorlaufenden Bogens zu unterstützen, können zusätzliche Saugelemente zwischen dem Saugband und der Bremseinrichtung angeordnet sein, die einen Unterdruck erzeugen und somit die Tragkraft des Saugbandes unterstütze. Alternativ oder zusätzlich können zwischen dem Saugband und der Bremseinrichtung auch Blaselemente angeordnet sein, die mit Hilfe eines Überdrucks das Anheben des vorlaufenden Bogens unterstützen.

Andere konstruktive Lösungen zur Erzeugung eines unter- oder überlappenden Schuppenstroms sind aber ebenfalls möglich. So kann das Anheben der Bögen auch mittels Druckluft oder durch Unterdruckerzeugung erfolgen. Zu diesem Zweck kann die Schuppeinrichtung auch einen Druck- oder Saugkasten aufweisen, der getaktet gesteuert wird, das heißt, dass periodisch Druckluft ausgetragen oder es periodisch ein Unterdruck erzeugt wird, um den Bogen anzuheben bzw. anzusaugen. Das Anheben der Bögen und das anschließende Verzögern kann auch mit einer gleichen Baugruppe erfolgen, beispielsweise einem Saugkasten, der den Bogen vorzugsweise im Bereich der Hinterkante ansaugt und dann verzögert weitertransportiert. Entsprechend angepasste konstruktive Ausgestaltungen sind möglich, um eine Unter- oder Überlappung der Bögen zu erzeugen.

Der erfindungsgemäßen Vorrichtung kann ein quasi endloses Band aus Papier oder Karton zugeführt werden. Das Band kann beispielsweise von einer Rolle abgerollt und durch einen Papierspeicher geführt werden, In einer Querschneideeinrichtung kann das Band in Bögen mit einem definierten Format, also einer definierten Länge, geschnitten werden. Bei dem Querschneider kann es sich um eine Welle handeln, die mit einem oder mehreren Messern bestückt ist. Im Zusammenspiel mit wenigstens einem weiteren Messer, dass unterhalb der Band- bzw. Bogentransportebene liegt und vorzugsweise feststeht, wird das Band in Bögen geschnitten. Alternativ kann es sich bei dem Querschneider um zwei gegenläufig rotierende Wellen handeln, die jeweils mit einem oder mehreren Messern bestückte sind.

Nach der Schuppeinrichtung folgt in Transportrichtung der Bögen eine Bremseinrichtung. Die Bremseinrichtung kann eine oder mehrere Nipprollen aufweisen, die beispielsweise mit langsam laufenden Transportbändern einen Bremsspalt für den Durchlauf von geschuppt zusammengeführten Bögen ausbilden. Die Bremseinrichtung bremst die einlaufenden Bögen an der Bogenvorderkante ab und sorgt dafür, dass die unter- oder überlappenden Bögen mit einer gleichen und konstanten Geschwindigkeit in Transportrichtung weiterbefördert werden. Ein Bogen läuft im Betrieb vorzugsweise Zeitgleich mit seiner Vorderkante in den Bremsspalt der Bremseinrichtung ein, während er im Wesentlichen zeitgleich von dem Saugband der Schuppeinrichtung an der Hinterkante abgebremst wird. Die Bremseinrichtung weist im Betrieb eine etwas höhere Geschwindigkeit als das Saugband der Schuppeinrichtung auf, damit die Bögen gespannt werden und weniger durchhängen. Die Geschwindigkeit des Saugbandes beträgt ca. 95 - 99 % der Bremseinrichtungsgeschwindigkeit, vorzugsweise 97 %.

Die Bögen werden bis die Bogenvorderkante in den Bremsspalt der Bremseinrichtung einläuft und die Bögen gleichzeitig von dem Saugband der Schuppeinrichtung an der Hinterkante abgebremst werden, mit einer hohen Geschwindigkeit mittels schnell laufender Transportbänder transportiert. Anschließend werden die Bögen mit einer konstanten, niedrigeren Geschwindigkeit mittels langsam laufender Bänder weiter transportiert.

Der Bremseinrichtung kann in Transportrichtung ein Übergabetisch nachgeordnet sein, auf dem die überlappenden Bögen in Transportrichtung weiter transportiert werden und von dem die einzelnen Bögen an eine nachfolgende weiterverarbeitende Maschine übergeben werden. Die Übergabe erfolgt an einem Übergabepunkt, der von der weiterverarbeitenden Maschine abhängt. Der Übergabepunkt, an dem die einzelnen Bögen zu einer bestimmten Zeit mit einer bestimmten Geschwindigkeit und einer bestimmten Taktfrequenz angeliefert werden müssen, um von der weiterverarbeitenden Maschine übernommen werden zu können, liegt in der Regel in Bogenförderrichtung kurz hinter dem Übergabetisch.

Die Schuppeinrichtung ist erfindungsgemäß derart ausgebildet, dass sie in und/oder entgegen der Transportrichtung der Bögen schnittlängenabhängig verstellbar ist. "Schnittlängenabhängig" bezieht sich auf eine Änderung des Abstandes der Schuppeinrichtung relativ zur ortsfesten Querschneideeinrichtung für einen Formatwechsel des Bogenformats.

Die Bremseinrichtung ist in und/oder entgegen der Transportrichtung der Bögen schnittlängenabhängig unverstellbar ausgebildet. Mit anderen Worten ausgedrückt bedeutet dies, dass die Bremseinrichtung ortsfest angeordnet ist und bei einem Formatwechsel des Bogenformats nicht relativ zum Übergabepunkt verfahren, versetzt oder verschoben wird. Die Bremseinrichtung weist dann, unabhängig vom Bogenformat, stets den gleichen Abstand zum Übergabepunkt auf. Es findet also keine schnittlängenabhängige Verstellung der Bremseinrichtung statt. Durch die konstante Übergabelänge wird die Systemanpassung an ein verändertes Bogenformat deutlich vereinfacht. Es ist im Rahmen der Erfindung grundsätzlich aber auch nicht ausgeschlossen, dass die Bremseinrichtung zusätzlich zur Schuppeinrichtung in und/oder entgegen der Transportrichtung der Bögen schnittlängenabhängig verstellbar ausgebildet ist, was eine sehr exakte Ausrichtung der beiden Funktionseinheiten auf die Vorder- und Hinterkante eines nachlaufenden Bogens zulässt.

Der Abstand zwischen der Bremseinrichtung und der Querschneideeinrichtung in der Transportebene der Bögen ist bei unterschiedlichen Schnittlängen der Bögen bzw. bei unterschiedlichen Bogenformaten gleich. Bei einem Formatwechsel bedarf es damit keiner Anpassung dieses Abstandes, was die Formatänderung weiter vereinfacht.

Die Schuppeinrichtung kann eine Verzögerungseinheit und eine Anhebeeinheit zur Unterlappung der Bögen oder eine Verzögerungseinheit und eine Niederdrückeinheit zur Überlappung der Bögen aufweisen, wobei, vorzugsweise, die Verzögerungseinheit und die Anhebeeinheit oder Niederdrückeinheit gemeinsam in oder entgegen der Transportrichtung der Bögen verstellbar sind. Damit werden kurze Rüstzeiten bei der Einstellung der erfindungsgemäßen Vorrichtung auf eine geänderte Schnittlänge der Bögen ermöglicht. Die Verzögerungseinheit und die Anhebeeinheit oder die Niederdrückeinheit können jeweils einen eigenen Antrieb zum Verstellen in und/oder entgegen der Transportrichtung der Bögen aufweisen und, vorzugsweise, gemeinsam oder getrennt voneinander ansteuerbar sein. Weist die Verzögerungseinheit, beispielsweise ausgebildet als Saugband, eine ausreichende Länge in und/oder entgegen der Transportrichtung der Bögen auf, so kann auch lediglich die Anhebeeinheit oder die Niederdrückeinheit in und/oder entgegen der Transportrichtung der Bögen verstellt werden.

Ein bekannter Rollenquerschneider der in der DE 101 19 408 A1 beschriebenen Art weist einen Modulcharakter auf, wobei die Querschneideeinrichtung und die Schuppeinrichtung in einem gemeinsamen Fahrgestell angeordnet sind. Das Fahrgestell lässt sich über Rollen, die auf Schienen gelagert sind, seitlich bzw, quer zur Transportrichtung der Bögen relativ zu einem Anleger einer weiterverarbeitenden Maschine verfahren bzw. verschieben. Durch die seitliche Verfahrbarkeit des Fahrgestells soll ein guter Zugang für Wartungs- und Servicearbeiten geschaffen werden, wobei es das Fahrgestell zulässt, die Querschneideeinrichtung vollständig aus dem Bereich des Anlegers der weiterverarbeitenden Maschine herauszubewegen.

Ein Zugang zu den in dem Fahrgestell gelagerten Funktionseinheiten ist allerdings aufwendig und zeitintensiv. Bei Anordnung der Schuppeinrichtung und der Querschneideeinrichtung in einem gemeinsamen Fahrgestell ist insbesondere die schlechte Zugänglichkeit der Schuppeinrichtung, des Querschneiders und der Bogentransportbänder von Nachteil, was weiter insbesondere eine Verstellung der Schuppeinrichtung in und/oder entgegen der Transportrichtung der Bögen zur Anpassung an veränderte Bogenformate bzw. Schnittlängen erschwert.

Bei einer alternativen Ausführungsform der Erfindung, die insbesondere in Verbindung mit den zuvor beschriebenen Erfindungsaspekten verwirklicht sein kann, weist die erfindungsgemäße Vorrichtung ein Fahrgestell auf, in dem wenigstens die Schuppeinrichtung aufgenommen bzw. gelagert ist, wobei das Fahrgestell seitlich bzw. quer zur Transportrichtung der Bögen unabhängig von der Querschneideeinrichtung und, vorzugsweise, relativ zu einem Anleger einer weiterverarbeitenden Maschine, verfahrbar oder verschiebbar ausgebildet ist. Das Fahrgestell kann über Rollen auf Schienen geführt sein. Das Fahrgestell kann motorisch angetrieben sein. Die Trennung der Transportebene erfolgt erfindungsgemäß im Bereich zwischen der Querschneideeinrichtung und der Schuppeinrichtung.

In einer bevorzugten Ausführungsform der Erfindung greifen die schnell laufenden Transportbänder der Querschneideeinrichtung und die schnell laufenden Transportbänder der Schuppenrichtung kammartig ineinander. Die Vorrichtung erlaubt ein Verschieben bzw. Verstellen der Transportbänder der Schuppeinrichtung in und entgegen der Transportrichtung der Bögen, damit die Transportbänder aus dem kammartigen Eingriff gefahren werden können, um ein Verschieben des Fahrgestells der Schuppeinrichtung quer zur Transportrichtung zu ermöglichen. Nachdem das Fahrgestell seitlich aus dem Bereich der Querschneideeinrichtung bewegt worden ist, ist ein Zugang zur Schuppeinrichtung zu Wartungs- und/oder Umrüstarbeiten, insbesondere aber auch für eine formatabhängige Verstellung der Schuppeinrichtung in und/oder entgegen der Transportrichtung der Bögen, leichter und innerhalb kürzerer Zeit möglich, Eine Papierbahn kann dabei bis zur Querschneideeinrichtung eingezogen bleiben, was zu einer weiteren Verfahrensvereinfachung führt.

In dem Fahrgestell kann darüber hinaus die Bremseinrichtung gelagert und damit zusammen mit der Schuppeinrichtung seitlich relativ zu einem Maschinenanleger und der Querschneideeinrichtung bewegbar angeordnet sein. An dem Fahrgestell kann zudem ein Übergabetisch befestigt sein, der zum Weitertransport der Bögen von der Bremseinrichtung zur weiterverarbeitenden Maschine dient und an seinem Ende einen Übergabepunkt zur Übergabe der nachfolgenden Bögen des geschuppten Bogenstroms an eine Übernahmeeinrichtung der weiterverarbeitenden Maschine definiert.

Die Querschneideeinrichtung ist vorzugsweise quer zur Transportrichtung der Bögen und insbesondere quer zu einem Papierspeicher und, weiter insbesondere, zu einer Abrolleinrichtung für Papierrollen nicht-bewegbar ausgebildet, Grundsätzlich besteht aber die Möglichkeit, auch die Querschneideeinrichtung seitlich bzw, quer zur Transportrichtung der Bögen und relativ zum Papierspeicher und der Abrolleinrichtung verfahrbar auszubilden.

Zur Übergabe der Bögen an eine weiterverarbeitende Maschine ist bei aus dem Stand der Technik bekannten Rollenquerschneidern üblicher Weise ein zur Transportebene der Bögen schwenkbarer Übergabetisch vorgesehen, der nach dem Niederschwenken zusammen mit einem Fahrgestell, in dem die Bremseinrichtung, die Schuppeinrichtung und die Querschneideeinrichtung gelagert sind, seitlich zu einem Maschinenanleger verfahrbar ist. Durch die schwenkbare Anordnung des Übergabetisches an dem Fahrgestell wird die maximale Übergabelänge des Übergabetisches durch die Laufhöhe des Übergabetisches beim seitlichen Verfahren des Fahrgestells bzw. durch den lichten Abstand der Schwenkachse des Übergabetisches zum Aufstellungsort bzw. zum Boden begrenzt.

Zur Lösung der eingangs genannten Aufgabe wird bei einer alternativen Ausführungsform der erfindungsgemäßen Vorrichtung ein Übergabetisch zur Bogenübergabe an eine Bogenverarbeitungsmaschine vorgesehen, wobei der Übergabetischnicht-schwenkbar gelagert und in wenigstens einer linearen oder bogenförmigen Bewegung höhenverstellbar ist. Der Übergabetisch ist schräg zur Transportebene des Schuppenstroms höhenverstellbar oder höhenverfahrbar. Anders als bei einer schwenkbaren Befestigung des Übergabetisches ist erfindungsgemäß eine vorzugsweise geradlinige Absenkung des Übergabetisches schräg zum Boden möglich, so dass die Übergabelänge nicht durch den Bodenabstand des Übergabetisches beschränkt ist, sondern größer als der Bodenabstand sein kann. Der Übergabetisch lässt sich zudem in einfacher Weise aus dem Bereich eines Maschinenanlegers bewegen. Dies ist insbesondere dann von Vorteil, wenn der Übergabetisch an einem Fahrgestell befestigt und zusammen mit dem Fahrgestell quer zur Transportrichtung der Bögen relativ zum Maschinenanleger verfahrbar oder verschiebbar ist. In dem Fahrgestell können dann vorzugsweise die Bremseinrichtung und die Schuppeinrichtung gelagert sein. Nach dem Absenken befindet sich der Übergabetisch dann unterhalb der Transportebene der Bögen und kann in das Fahrgestell eingefahren bzw. in dem Fahrgestell aufgenommen sein, Der Übergabetisch kann so in das Fahrgestell eingefahren werden, dass er im abgesenkten Zustand in Transportrichtung nicht über die Bremseinrichtung vorsteht.

In einer vorteilhaften Ausführungsform weist die Bremseinrichtung wenigstens eine Andruckrolle, auch Nipprolle genannt, zur Ausbildung eines Bremsspaltes auf, wobei der Übergabetisch beim Absenken relativ zur oberhalb der Transportebene der Bögen angeordneten Nipprolle nach unten verstellt bzw. verfahren wird, Dem Übergabetisch kann eine Bänderstrecke zugeordnet sein, die zusammen mit dem Übergabetisch unabhängig von der Andruckrolle verfahrbar ist. Die Andruckrolle kann ortsfest in einem verfahrbaren Fahrgestell oder Maschinenmodul angeordnet sein, das auch die Schuppeinrichtung trägt. Die Bänderstrecke des Übergabetisches kann beim schrägen Hochfahren des Übergabetisches in Richtung zur Andruckrolle mitbewegt werden, so dass sich ein Bremsspalt zwischen der Andruckrolle und der Bänderstrecke ausbildet. Der Bremsspalt bildet sich dabei vorzugsweise zwischen der Andruckrolle und einem Bandanfang der Bänderstrecke aus. Der Bremsspalt kann so auf einfache Weise eingestellt und an unterschiedliche Dicken der Bögen angepasst werden,

Es ist zweckmäßig, wenn dem Übergabetisch eine eigene, langsame Bänderstrecke zugeordnet ist, um Bögen von der Bremseinrichtung bis zu einem Übergabepunkt zu transportieren. Die langsame Bänderstrecke ist vorzugsweise von der schnellen Bänderstrecke konstruktiv entkoppelt, wobei die schnelle Bänderstrecke die Bögen von der Querschneideeinrichtung zur Schuppeinrichtung und weiter zur Bremseinrichtung transportiert. Die konstruktive Entkopplung kann insbesondere vorsehen, dass die schnell laufenden Bänder und die langsam laufenden Bänder in horizontaler Richtung und/oder in vertikaler Richtung und/oder schräg zum Boden relativ zueinander bewegt werden können, wenn der Übergabetisch abgesenkt oder hochgefahren wird. Somit lässt sich der Übergabetisch vorzugsweise schräg zur Transportebene des Bogenstroms und relativ zur Bremseinrichtung bewegen, ohne die Transportfunktion der Bänderstrecken zu beeinträchtigen.

Die Neigung der Bewegungsbahn des Übergabetisches zur Horizontalen kann beim schrägen Absenken des Übergabetisches vorzugsweise zwischen 30° bis 60°, weiter vorzugsweise ca. 45°, betragen.

Die zuvor beschriebenen Ausführungsformen der Erfindung können bedarfsweise miteinander kombiniert werden. Der Offenbarungsgehalt der Erfindung ist nicht auf die durch die gewählte Absatzformatierung vorgegebenen Kombinationen von Erfindungsmerkmalen beschränkt.

Weitere Merkmale der vorliegenden Erfindung ergeben sich aus der nachfolgenden Beschreibung eines Ausführungsbeispiels der Erfindung anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von Ihrer Zusammenfassung in den Ansprüchen oder deren Rückbeziehungen.

Die Erfindung wird im Folgenden anhand der Figuren näher erläutert; es zeigen
- Fig. 1: eine schematische Darstellung einer Vorrichtung zur Bildung eines Schuppenstroms von unterlappenden Bögen nach dem Stand der Technik in einer Seitenansicht,
- Fig. 2: eine schematische Darstellung einer erfindungsgemäßen Vorrichtung zur Bildung eines Schuppenstroms von unterlappenden Bögen im Betriebszustand in einer Seitenansicht und
- Fig. 3: eine schematische Darstellung der in Fig. 2 gezeigten Vorrichtung in einem Nicht-Betriebszustand mit einem schräg zur Transportebene des geschuppten Bogenstroms verfahrbaren Übergabetisch.

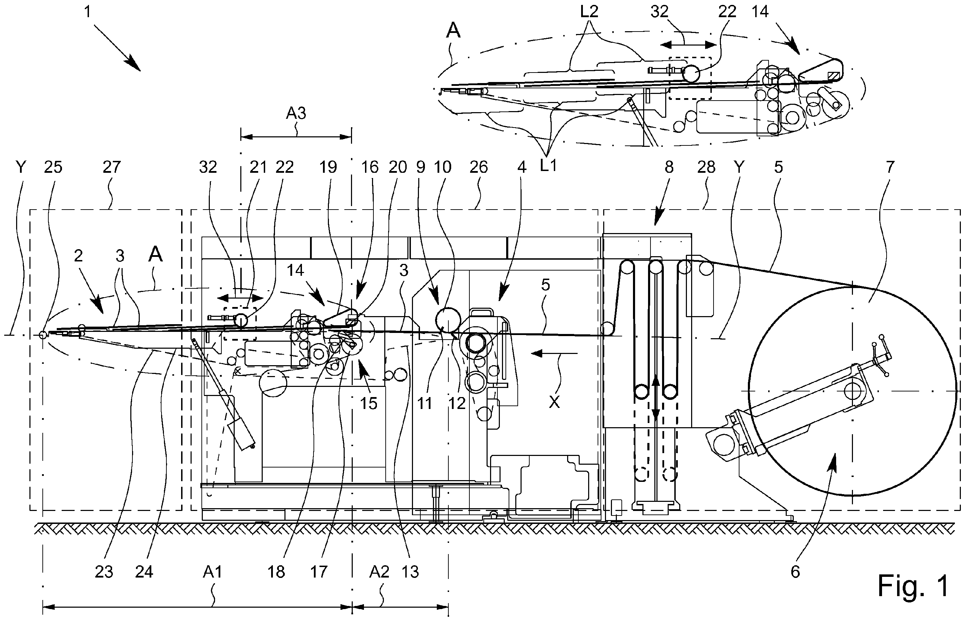

In Fig. 1 ist schematisch eine aus dem Stand der Technik bekannte Vorrichtung 1 zur Bildung eines Bogenstroms 2 von unterlappenden Bögen 3 aus Papier oder Karton gezeigt. Die Vorrichtung 1 weist eine Zuführeinrichtung 4 auf, die ein quasi endloses Folien-, Papier- oder Kartonband 5 fördert. Das Band 5 wird mit einer Abrolleinrichtung 6 von einer Papier- oder Papprolle 7 auf einer Zuführseite bereitgestellt und wird durch einen zwischengeschalteten Papierspeicher 8 geführt. Die Zufuhr zum Papierspeicher 8 erfolgt von oben, Eine der Zuführeinrichtung 4 in Transportrichtung X der Bögen 3 nachgeschaltete Querschneideeinrichtung 9 schneidet das Band 5 in Bögen 3 definierter Länge. Die Querschneideeinrichtung 9 ist in Form einer drehbar gelagerten Welle 10 ausgebildet, die an ihrem Umfang eine parallel zur Längsachse angeordnete Schneide 11 und eine darunter angeordnete feststehende Schneide 12 aufweist, Befinden sich die auf der Welle 10 angeordnete Schneide 11 und die feststehende Schneide 12 im Eingriff, wird das Band 5 geschnitten. Über die Veränderung der Drehgeschwindigkeit der Welle 10 und/oder eine Veränderung der Geschwindigkeit der Materialbahn 5 kann die Bogenlänge eingestellt werden,

Die Bögen 3 werden in Transportrichtung X auf einer Bänderstrecke mit wenigstens einem schnell laufenden Transportband 13 mit derselben Geschwindigkeit weiter transportiert. Eine nachfolgende Schuppeinrichtung 14 besteht aus einer Anhebeeinheit 15 und einer Verzögerungseinheit 16. Die Anhebeeinheit 15 weist eine Schlägerwelle 17 mit wenigstens einem Schläger 18 auf. Die Verzögerungseinheit 16 weist wenigstens ein oberhalb der Transportebene Y der Bögen 3 angeordnetes Saugband 19 auf. Das Saugband 19 wird gebildet durch ein mit Löchern versehenes Transportband, das mit einem vakuumerzeugenden Saugkasten 20 zusammenwirkt. Der Schläger 18 der Anhebeeinheit 15 drückt bei jeder Umdrehung einen Bogen 3, insbesondere bezogen auf die Hinterkante, an das Saugband 19. Da das Saugband 19 mit einer geringeren Geschwindigkeit bewegt wird als das schnell laufende Transportband 13, wird die Vorderkante eines nachlaufenden Bogens 3 unter die angehobene Hinterkante eines vorlaufenden Bogens 3 befördert. Mit der nächsten Umdrehung der Schlägerwelle 17 wird der nachlaufende Bogen 3 an der Hinterkante angehoben, so dass der weiter nachlaufende Bogen 3 unter den nachlaufenden Bogen 3 gefördert werden kann. Auf diese Weise wird ein Bogenstrom 2 von unterlappenden Bögen 3 erzeugt. Befindet sich die Hinterkante des vorlaufenden Bogens 3 nicht mehr im Eingriffsbereich des Saugbandes 19, wird der vorlaufende Bogen 3 vom nachlaufenden Bogen 3, der sich im Eingriff des Saugbandes 19 befindet, oberhalb der Bogentransportebene gehalten.

Nach der Schuppeinrichtung 14 ist in Transportrichtung X des Bogenstroms 2 eine Bremseinrichtung 21 vorgesehen. Die Bremseinrichtung 21 weist eine Mehrzahl von Nipprollen 22 auf, die zusammen mit langsam laufenden Transportbändern 23 einen Bremsspalt bilden. Der Abstand zwischen der Bremseinrichtung 21 und der Schuppeinrichtung 20 ist so eingestellt, dass die Bogenvorderkante eines Bogens 3 vorzugsweise gerade in den Bremsspalt einläuft und verzögert wird, wenn der hintere Bogenbereich, insbesondere die Hinterkante des Bogens 3, von dem Schläger 18 der Schlägerwelle 17 an das Saugband 19 gedrückt wird. Der Bogen 3 wird auf diese Weise vorzugsweise im Wesentlichen zeitgleich von den Nipprollen 22 im vorderen Bogenbereich und von dem Saugband 19 im hinteren Bogenbereich abgebremst bzw, verzögert. Im Anschluss an die Bremseinrichtung 21 wird der Bogenstrom 2 mit gleicher Geschwindigkeit und insbesondere im Wesentlichen gleicher Schuppenlänge L1 der unterlappenden Bögen 3 auf einem Übergabetisch 24 zu einem Übergabepunkt 25 weitertransportiert.

An dem Übergabepunkt 25 werden die Bögen 3 von einer nicht gezeigten Übernahmeeinrichtung einer weiterverarbeitenden Maschine, wie beispielsweise einer Druckmaschine, erfasst und an die weiterverarbeitende Maschine übergeben. Für die störungsfreie Übergabe müssen die Bögen 3 den Übergabepunkt 25 bezogen auf die Vorderkante zu einem bestimmten Zeitpunkt mit einer bestimmten Geschwindigkeit erreichen, das heißt mit einer bestimmten Taktfrequenz. Die Taktfrequenz der weiterverarbeitenden Maschine bestimmt damit die Taktfrequenz der Bogenbereitstellung am Übergabepunkt 25. Gleichzeitig gibt die weiterverarbeitende Maschine eine Geschwindigkeit vor, mit der die Bögen 3 am Übergabepunkt 25 bereitgestellt werden sollen.

Der Abstand A1 zwischen dem Übergabepunkt 25 und der Schuppeinrichtung 14 ist bei der bekannten Vorrichtung formatunabhängig. Der Abstand A2 zwischen der Schuppeinrichtung 14 und der Querschneideeinrichtung 9 ist ebenfalls formatunabhängig. Wird das Bogenformat (die Länge des Bogens 3) verändert, muss bei der bekannten Vorrichtung der Abstand A3 zwischen der Bremseinrichtung 21 und der Schuppeinrichtung 20 entsprechend an das geänderte Bogenformat angepasst werden, indem die Bremseinrichtung 21 in oder entgegen der Transportrichtung X der Bögen 3 verstellt wird. Dies ist in Fig. 1 durch den Doppelpfeil 32 gezeigt. Die Nipprollen 22 werden dabei derart relativ zur Schlägerwelle 17 verstellt, dass auch bei einem Formatwechsel noch sichergestellt ist, dass die Vorderkante eines Bogens 3 gerade in den Bremsspalt einläuft und verzögert wird, wenn der hintere Bogenbereich von dem Schläger 18 an das Saugband 19 gedrückt wird,

Eine Verstellung der Bremseinrichtung 21 relativ zur Schuppeinrichtung 14 führt jedoch auch zu einer Veränderung des Abstandes zwischen der Bremseinrichtung 21 und dem Übergabepunkt 25 zur weiterverarbeitenden Maschine. Da die Übergabelänge, also der Abstand zwischen der Bremseinrichtung 21 und dem Übergabepunkt 25, ein ganzzahliges Vielfaches der Überlappungslänge sein soll, muss daher bei einem Formatwechsel die Überlappungslänge bzw. der Schuppungsgrad der Bögen 3 im Bogenstrom 2 formatabhängig angepasst werden.

Die Anpassung der Überlappungslänge L2 der Bögen 3 erfolgt durch Veränderung der Geschwindigkeitsunterschiede zwischen den schnell 13 und langsam laufenden Transportbändern 23. Durch den veränderten Abstand zwischen der Bremseinrichtung 21 und dem Übergabepunkt 25, ist eine Verstellung der Phasenlage der Anhebeeinheit 15 der Schuppeinrichtung 14 und der die rotierende Schneide 11 tragenden Welle 10 der Querschneideeinrichtung 9 notwendig. Die Verstellung der Phasenlage kann jedoch dazu führen, dass die Querschneideeinrichtung 9 bei einem Systemstopp im Schnitt angehalten wird. Eine dadurch notwendige manuelle Papierentnahme aus dem Bereich der Querschneideeinrichtung 9 und/oder Schuppeinrichtung 14 führt zu einer Verzögerung bei einem Neustart der Vorrichtung 1.

Wegen den vorgenannten Bedingungen, die beim Einrichten der Vorrichtung 1 bzw. bei einer Änderung des Bogenformates erfüllt bzw. beachtet werden müssen, ist es nicht möglich alle diese Bedingungen zu erfüllen. Aus diesem Grund wird die Vorrichtung 1 in der Regel mit nicht idealen Einstellungen betrieben. Das heißt, dass beispielsweise die Übergabelänge in der Regel nicht einem ganzzahligen Vielfachen der Überlappungslänge entspricht. Gleichzeitig wird ein Bogen 3 in der Regel nicht mit der gleichen Geschwindigkeit am Übergabepunkt von den langsam laufenden Transportbändern 23 bereitgestellt, mit der die Bögen von der weiterverarbeitenden Maschine weitertransportiert werden. Somit ist mit der aus dem Stand der Technik bekannten Vorrichtung ein optimaler Betrieb in der Regel nicht möglich.

In Fig. 1 ist schematisch gezeigt, dass bei der bekannten Vorrichtung 1 die Querschneideeinrichtung 9, die Schuppeinrichtung 14 und die Bremseinrichtung 21 in einem gemeinsamen Fahrgestell 26 angeordnet sind, das über Rollen und Schienen seitlich bzw. quer zur Transportrichtung X aus dem Bereich eines Maschinenanlegers 27 der weiterverarbeitenden Maschine und relativ zu dem Papierspeicher 5 und der Abrolleinrichtung 6 verfahrbar ist. Der Papierspeicher 5 und die Abrolleinrichtung 6 sind in einem ortsfesten Maschinenmodul 28 angeordnet. Um das Fahrgestell 26 aus dem Bereich des Maschinenanlegers 27 verfahren zu können, ist der Übergabetisch 24 schwenkbar an dem Fahrgestell 26 gehalten bzw. befestigt.

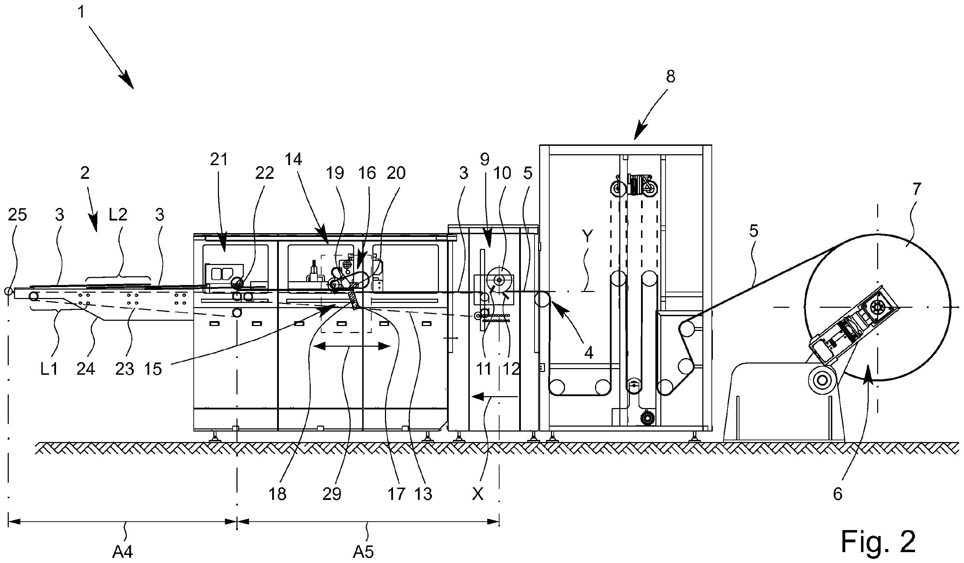

In Fig. 2 ist schematisch eine andere Vorrichtung 1 zur Bildung eines Schuppenstroms 2 von unterlappenden Bögen 3 in einer Seitenansicht gezeigt. Gleiche oder übereinstimmende Funktionseinheiten, Baugruppen, Bauteile sowie sonstige übereinstimmende Merkmale der in den Figuren 1 und 2 gezeigten Vorrichtungen 1 sind mit gleichen Bezugszeichen versehen. Die Bildung eines Schuppenstroms 2 von unterlappenden Bögen aus Papier oder Karton erfolgt bei der in Fig. 2 gezeigten Ausführungsform entsprechend der oben beschriebenen Schuppenstrombildung bei der Vorrichtung 1 aus Fig. 1.

Abweichend zu der in Fig. 1 gezeigten Vorrichtung 1 ist bei der Ausführungsform gemäß Fig. 2 vorgesehen, dass die Schuppeinrichtung 14 in und/oder entgegen der Transportrichtung X der Bögen schnittlängenabhängig verstellbar ausgebildet ist. Dies ist in Fig. 2 schematisch durch den Doppelpfeil 29 gezeigt. Die Bremseinrichtung 21 ist dagegen in und/oder entgegen der Transportrichtung X der Bögen 3 schnittlängenabhängig unverstellbar ausgebildet. Mit anderen Worten ausgedrückt bedeutet dies, dass die Schuppeinrichtung 14 bei einer Änderung der Schnittlänge der Bögen 3 bzw. bei einem Wechsel des Bogenformats in Abhängigkeit von der aktuellen Bogenlänge relativ zu der Bremseinrichtung 21 so versetzt, verschoben oder verfahren wird, dass bei jeder eingestellten Bogenlänge ein vorlaufender Bogen 3 ungefähr gleichzeitig vorne von der Bremseinrichtung 21 und hinten von der Schuppeinrichtung 14 gebremst wird. So bleibt der Abstand A4 zwischen dem Übergabepunkt 25 der vereinzelten Bögen 3 an eine weiterverarbeitende Maschine und der Bremseinrichtung 21 bzw. die Übergabelänge für unterschiedliche Formate bzw. Schnittlängen der Bögen 3 gleich, was zu einer erheblichen Vereinfachung bei der Einstellung der in Fig. 2 gezeigten Vorrichtung 2 auf ein anderes Bogenformat führt.

Für einen Formatwechsel kann die Schuppeinrichtung 14 insgesamt in oder entgegen der Transportrichtung X des Bogenstroms 2 verstellt werden, d.h. es werden die Anhebeeinheit 15 und die Verzögerungseinheit 16 gemeinsam bewegt, die zu diesem Zweck in einem in und/oder entgegen der Transportrichtung X der Bögen 3 bewegbaren Fahrgestell oder Rahmen oder Träger aufgenommen bzw. montiert sein können. Grundsätzlich ist es aber auch möglich, dass bei ausreichender Erstreckung des Saugbandes 19 in Transportrichtung X lediglich die Schlägerwelle 17 mit dem Schläger 18 in oder entgegen der Transportrichtung X verstellt wird.

Die Übergabelänge zwischen der Bremseinrichtung 21 und dem Übergabepunkt 25 bleibt damit bei einem Formatwechsel gleich. Ebenso bleibt der Abstand A5 zwischen der Bremseinrichtung 21 (bzw, den Nipprollen 22) und der Querschneidereinrichtung 9 gleich. Durch die stets gleiche Übergabelänge entfällt die Notwendigkeit, bei einem Formatwechsel die Überlappungslänge L2 der Bögen 3 im Schuppenstrom 2 zu ändern, Die Geschwindigkeit der langsam laufenden Transportbänder 23 kann somit für jedes Bogenformat gleich gehalten werden, wodurch die Bögen 3 formatunabhängig mit der gleichen Geschwindigkeit am Übergabepunkt 25 bereitgestellt werden können, mit der die Bögen 3 von der weiterverarbeitenden Maschine übernommen und weitertransportiert werden. Nur die Geschwindigkeit der schnell laufenden Transportbänder 13 muss an das neue Bogenformat angepasst werden. Des Weiteren muss lediglich die Phasenlage der Welle 10 der Querschneideeinrichtung 9 an das neue Bogenformat angepasst werden,

Bei einem Stopp der weiterverarbeitenden Maschine kommen aufgrund der gleichbleibenden Überlappungslänge die Vorderkanten eines jeden Bogen 3 zwischen der Bremseinrichtung 21 und dem Übergabepunkt 25 formatunabhängig an der jeweils gleichen Stelle zum Stehen. Die Lage der Voderkante des ersten Bogens 3, sowie die Lage der Voderkante des nachfolgenden Bogens 3 sind unabhängig vom Bogenformat bei jedem Stopp der weiterverarbeitenden Maschine gleich. Dies gilt für alle Bögen, die sich zwischen der Bremseinrichtung 21 und dem Übergabepunkt 25 befinden. Bei einem Systemstopp ist ein Bogen 3 gerade mit seiner Vorderkante in den Bremsspalt der Bremseinrichtung 21 eingetreten und wurde im Wesentlichen zeitgleich von dem Schläger 18 der Schuppeinrichtung 14 hochgeschlagen und von dem Saugband 19 der Schuppeinrichtung 14 an der Hinterkante abgebremst. Der nachfolgende Bogen 3 kann unter den vorlaufenden Bogen 3 gefördert werden, so dass die schnell laufenden Transportbänder 13 und die langsam laufenden Transportbänder 23 nicht gleichzeitig zum Stillstand kommen müssen, um die Phasenlage der schnell und langsam laufenden Transportbänder 13, 23 beizubehalten. Die schnell laufenden Transportbänder 13 können langsamer abbremsen und der nachlaufende Bogen 3, der auf den schnell laufenden Transportbändern 13 aufliegt, kann unter dem vorlaufenden bereits hochgedrückten Bogen 3 weiterlaufen.

Ein Anhalten der Querschneidereinrichtung 9 im Schnitt kann verhindert werden, weil der Abstand zwischen der Schuppeinrichtung 14 und der Bremseinrichtung 21 als Puffer dient. Droht ein Anhalten der Querschneideeinrichtung 9 im Schnitt, kann die Querschneideeinrichtung 9 zusammen mit den schnell laufenden Transportbändern 13 beispielsweise mit einer leichten Verzögerung angehalten werden, wodurch sich die Querschneideeinrichtung nicht mehr im Schnitt befindet. Durch das langsamere Abbremsen der schnell laufenden Transportbänder 13 wird ein verschleißfreies Anhalten der Vorrichtung bei verringertem Energieverbrauch während des Abbremsvorgangs realisiert, Dieser definierte Stopppunkt ist für alle Bogenformate gleich ausgebildet. Das bedeutet, dass die Vorderkanten aller Bögen 3 zwischen der Bremseinrichtung 21 und dem Übergabepunkt 25 bei einem Stopp jeweils bei allen Bogenformaten eine gleiche Lage relativ zum Übergabepunkt aufweisen. Die Phasenlage zwischen den schnell laufenden Transportbändern 13 und den langsam laufenden Transportbändern 23 kann aufgrund des Puffers beim Anhalten der Vorrichtung geändert werden. Beim Anfahren der Vorrichtung 1 müssen dann lediglich die langsam laufenden Transportbänder 23 kurz vor den schnell laufenden Transportbändern 13 angefahren werden, um die synchrone, aufeinander abgestimmte Phasenlage der schnell und langsam laufenden Transportbänder 13, 23 wiederherzustellen. Ein nachfolgender Systemstart ist somit in einfacher und schneller Weise und schnell möglich.

Zur Verstellung der Schuppeinrichtung 14 kann ein Antrieb vorgesehen sein, der insbesondere in Abhängigkeit von einem eingestellten Bogenformat automatisch ansteuerbar ist, um den Abstand zwischen der Bremseinrichtung 21 und der Schuppeinrichtung 14 derart einzustellen, dass die Bögen 3 vorzugsweise im Wesentlichen gleichzeitig am vorderen und hinteren Kantenbereich der Bögen 3 abgebremst bzw. verzögert werden.

Zwischen der Schuppeinrichtung 14 und der Bremseinrichtung 21 können zusätzliche Saugelemente vorgesehen sein, die mit Hilfe eines Vakuums frei- und durchhängende Bögen nach oben in Richtung des Saugbandes 19 saugen. Alternativ oder ergänzend können auch Blaselemente angeordnet sein, die die Bögen auf eine Höhe in Richtung des Saugbandes 19 drücken

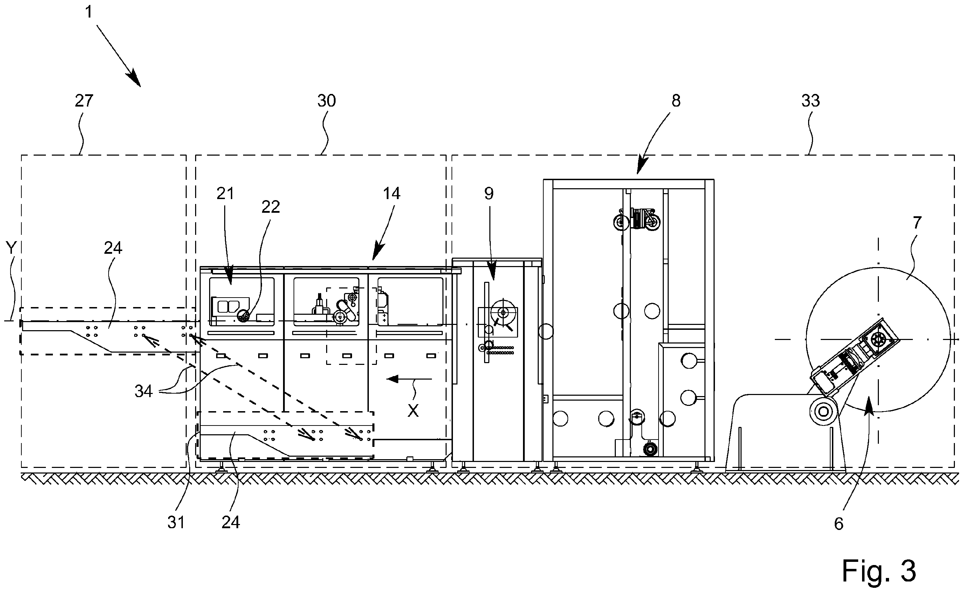

Fig. 3 zeigt schematisch eine Seitenansicht einer Vorrichtung 1 der in Fig. 2 gezeigten Art vor der Betriebsaufnahme. Gleiche Bezugszeichen kennzeichnen gleiche Funktionseinheiten, Baugruppen und Bauteile sowie technische Merkmale.

Gemäß der in Fig. 3 gezeigten Ausführungsform ist die Schuppeinrichtung 14 zusammen mit der Bremseinrichtung 21 in einem Fahrgestell 30 aufgenommen bzw. gelagert und mit dem Fahrgestell 30 seitlich, d.h. quer zur Transportrichtung X der Bögen 3, aus dem Bereich eines Maschinenanlegers 27 heraus bewegbar, insbesondere verschiebbar oder verfahrbar, wobei das Fahrgestell 30 über Rollen auf Schienen verfahrbar sein kann. Die Querschneideeinrichtung 9, der Papierspeicher 8 und die Abrolleinrichtung 6 können dagegen einem ortsfesten Maschinenmodul 33 zugeordnet sein, so dass durch seitliches Bewegen des Fahrgestells 30 relativ zur Querschneideeinrichtung 9 auch ein einfacher Zugriff auf die Schuppeinrichtung 14, die Querschneideeinrichtung 9 und die Schneiden 11 und 12 möglich ist. Die schnell laufenden Transportbänder 13 der Querschneideeinrichtung 9 und die schnell laufenden Transportbänder 13 der Schuppeinrichtung 14 bilden einen in Fig. 3 nicht dargestellten gegenseitigen kammartigen Eingriff zueinander aus. Die schnell laufenden Transportbänder 13 der Querschneideeinrichtung 9 und/oder die schnell laufenden Transportbänder 13 der Schuppeinrichtung 14 sind in und/oder entgegen der Transportrichtung X verfahrbar. Auf diese Weise kann der kammartige Eingriff der Transportbänder aufgehoben werden, um das Fahrgestell quer zur Transportrichtung X der Bögen 3 verfahren zu können. Im Übrigen kann eine Papierbahn bis zur Querschneideeinrichtung 9 eingezogen bleiben, was zu einer Verfahrensvereinfachung führt, Nachdem das Fahrgestell 30 seitlich aus dem Bereich der Querschneideeinrichtung 9 bewegt worden ist, ist ein Zugang zu den verschiedenen Funktionseinheiten zu Wartungs- und/oder Umrüstarbeiten, insbesondere aber für eine formatabhängige Verstellung der Schuppeinrichtung 14 in und/oder entgegen der Transportrichtung X der Bögen 3, in einfacher Weise und in kurzer Zeit möglich.

Wie in Fig. 3 schematisch dargestellt ist, ist ein Übergabetisch 24 vorgesehen, der schräg zur Transportebene Y der Bögen 3 bzw. eines gebildeten Schuppenstroms 2 verfahrbar ist. Dies ist in Fig. 3 durch die beiden Strichlinien 34 gezeigt. Vorzugsweise lässt sich der Übergabetisch 24 in den Innenbereich des Fahrgestells 30 hinein absenken und zwar so, dass der Übergabetisch 24 mit seinem vorderen Ende 31 nicht über das Fahrgestell 30 in Transportrichtung X der Bögen übersteht. Dadurch wird das seitliche Verfahren des Fahrgestells 30 aus dem Bereich des Maschinenanlegers 27 heraus nicht durch den Übergabetisch 24 behindert, Durch die nicht-schwenkbare Befestigung des Übergabetisches 24 an dem Fahrgestell 30 ist eine vorzugsweise geradlinige Absenkung des Übergabetisches 24 schräg zum Boden möglich, wobei die Transportebene des Übergabetisches 24 stets horizontal ausgerichtet bleibt. Alternativ könnte auch vorgesehen sein, dass sich der Übergabetisch 24 zunächst in einer vertikalen Bewegung absenken und dann in einer horizontalen Bewegung in das Fahrgestell 30 einfahren lässt.

Nicht im Einzelnen ist in Fig, 3 gezeigt, dass zusammen mit dem Übergabetisch 24 eine langsam laufende Bänderstrecke schräg zur Transportebene Y des im Betrieb der Vorrichtung 1 gebildeten Schuppenstroms 2 verfahrbar ist. Die Nipprollen 22 der Bremseinrichtung 21 sind dagegen ortsfest am Fahrgestell 30 angeordnet, so dass es durch Hochfahren des Übergabetisches 24 in Richtung zur Bremseinrichtung 21 zur Ausbildung eines Bremsspaltes zwischen den Nipprollen 22 und langsam laufenden Transportbändern 23 kommt. Diese Stellung der Transportbänder 23 relativ zu den Nipprollen 22 ist in Fig. 2 gezeigt, Der Bremsspalt bildet sich dabei zwischen den Nipprollen 22 und den Bandanfängen der langsam laufenden Transportbänder 23 aus.

Wie sich weiter aus Fig. 2 ergibt und in Fig. 3 nicht im Einzelnen dargestellt ist, sind die langsam laufenden Transportbänder 23, die dem Übergabetisch 24 zugeordnet sind, derart konstruktiv von den schnell laufenden Transportbändern 13 getrennt, dass es möglich ist, die langsame Bänderstrecke durch Absenken des Übergabetisches 24 von der schnell laufenden Bänderstrecke zu entkoppeln und beim Hochfahren des Übergabetisches 24 wieder zu koppeln, um den Bogentransport sicherzustellen.

Der Bahneinzug für den Papierspeicher 8 erfolgt bei der in Fig, 2 und 3 gezeigten Vorrichtung 1 von unten, was zu einer vereinfachten Verfahrensdurchführung beiträgt.

### Bezugszeichenliste:

- 1: Vorrichtung
- 2: Schuppenstrom
- 3: Bögen
- 4: Zuführeinrichtung
- 5: Band
- 6: Abrolleinrichtung
- 7: Rolle
- 8: Papierspeicher
- 9: Querschneideeinrichtung
- 10: Welle
- 11: Schneide
- 12: Schneide
- 13: Transportband
- 14: Schuppeinrichtung
- 15: Anhebeeinheit
- 16: Verzögerungseinheit
- 17: Schlägerwelle
- 18: Schläger
- 19: Saugband
- 20: Saugkasten
- 21: Bremseinrichtung
- 22: Nipprolle
- 23: Transportband
- 24: Übergabetisch
- 25: Übergabepunkt
- 26: Fahrgestell
- 27: Maschinenanleger
- 28: Maschinenmodul
- 29: Doppelpfeil
- 30: Fahrgestell
- 31: Tischende
- 32: Doppelpfeil
- 33: Maschinenmodul
- 34: Strichlinie

## Patentansprüche

1. Vorrichtung (1), insbesondere Rollenquerschneider, zur Bildung eines Schuppenstroms (2) von unter- oder überlappenden Bögen (3), insbesondere von Papier- oder Kartonbögen, mit einer Transporteinrichtung zum Transport von Bögen (3), mit einer Schuppeinrichtung (14) zur bereichsweisen Unter- oder Überlappung der Bögen (3), mit einer der Schuppeinrichtung (14) in Transportrichtung (X) der Bögen (3) nachfolgenden Bremseinrichtung (21) zum Abbremsen von geschuppten Bögen (3), insbesondere durch Ausbildung eines Bremsspaltes für den Durchlauf von geschuppt zusammengeführten Bögen (3), und, vorzugsweise, mit einer der Schuppeinrichtung (14) vorgelagerten Querschneideeinrichtung (9) zum Schneiden eines Materialbandes (5) in einzelne Bögen (3), **dadurch gekennzeichnet, dass** die Schuppeinrichtung (14) in und/oder entgegen der Transportrichtung (X) der Bögen (3) schnittlängenabhängig verstellbar ausgebildet ist, wobei die Bremseinrichtung (21) in und/oder entgegen der Transportrichtung (X) der Bögen (3) schnittlängenabhängig unverstellbar ausgebildet ist und wobei der Abstand zwischen der Bremseinrichtung (21) und der Querschneideeinrichtung (9) in der Transportebene (Y) der Bögen (3) bei unterschiedlichen Schnittlängen gleich ist,

2. Vorrichtung (1) nach Anspruch 1, **dadurch gekennzeichnet, dass** die Schuppeinrichtung (14) eine Verzögerungseinheit (16) und eine Anhebeeinheit (15) aufweist und dass die Verzögerungseinheit (16) und die Anhebeeinheit (15) gemeinsam verstellbar sind.

3. Vorrichtung (1), insbesondere Rollenquerschneider, zur Bildung eines Schuppenstroms (2) von unter- oder überlappenden Bögen (3), insbesondere von Papier- oder Kartonbögen, mit einer Transporteinrichtung zum Transport von Bögen (3), mit einer Schuppeinrichtung (14) zur bereichsweisen Unter- oder Überlappung der Bögen (3), mit einer der Schuppeinrichtung (14) in Transportrichtung (X) der Bögen (3) nachfolgenden Bremseinrichtung (21) zum Abbremsen von geschuppten Bögen (3), insbesondere durch Ausbildung eines Bremsspaltes für den Durchlauf von geschuppt zusammengeführten Bögen (3), und, vorzugsweise, mit einer der Schuppeinrichtung (14) vorgelagerten Querschneideeinrichtung (9) zum Schneiden eines Materialbandes (5) in einzelne Bögen (3), insbesondere nach einem der vorhergehenden Ansprüche, **dadurch gekennzeichnet, dass** die Schuppeinrichtung (14) in einem Fahrgestell (30) gelagert ist, das relativ zur Querschneideeinrichtung (9) seitlich zur Transportrichtung (X) der Bögen (3) bewegbar ausgebildet ist.

4. Vorrichtung nach Anspruch 3, **dadurch gekennzeichnet, dass** die schnell laufenden Transportbänder (13) der Querschneideeinrichtung (9) und die schnell laufenden Transportbänder (13) der Schuppenrichtung (14) kammartig ineinandergreifen.

5. Vorrichtung nach Anspruch 4, **dadurch gekennzeichnet, dass** die schnell laufenden Transportbänder (13) und/oder die langsam der Querschneideeinrichtung (9) und die schnell laufenden Transportbänder (13) der Schuppenrichtung (14) in und entgegen der Transportrichtung (X) der Bögen (3) verstellbar bzw. verfahrbar ausgebildet sind.

6. Vorrichtung nach Ansprüchen 3 und 5, **dadurch gekennzeichnet, dass** die Querschneideeinrichtung (9) quer zur Transportrichtung (X) der Bögen (3) nicht-bewegbar ausgebildet bzw. gelagert ist.

7. Vorrichtung (1), insbesondere Rollenquerschneider, zur Bildung eines Schuppenstroms (2) von unter- oder überlappenden Bögen (3), insbesondere von Papier- oder Kartonbögen, mit einer Transporteinrichtung zum Transport von Bögen (3), mit einer Schuppeinrichtung (14) zur bereichsweisen Unter- oder Überlappung der Bögen (3), mit einer der Schuppeinrichtung (14) in Transportrichtung (X) der Bögen (3) nachfolgenden Bremseinrichtung (21) zum Abbremsen von geschuppten Bögen (3), insbesondere durch Ausbildung eines Bremsspaltes für den Durchlauf von geschuppt zusammengeführten Bögen (3), und, vorzugsweise, mit einer der Schuppeinrichtung (14) vorgelagerten Querschneideeinrichtung (9) zum Schneiden eines Materialbandes (5) in einzelne Bögen (3), insbesondere nach einem der vorhergehenden Ansprüche, **dadurch gekennzeichnet, dass** ein Übergabetisch (24) zur Bogenübergabe an eine Bogenverarbeitungsmaschine vorgesehen ist und dass der Übergabetisch (24) nicht-schwenkbar gelagert und in wenigstens einer linearen oder bogenförmigen Bewegung schräg zur Transportebene des Schuppenstroms höhenverstellbar ist.

8. Vorrichtung nach Anspruch 7, **dadurch gekennzeichnet, dass** der Bremseinrichtung (21) eine schnell laufende Bänderstrecke (13) zugeordnet ist und dass dem Übergabetisch (24) eine langsam laufende Bänderstrecke (23) zugeordnet ist, wobei die langsame laufende Bänderstrecke (23) zusammen mit dem Übergabetisch (24) unabhängig von der schnell laufenden Bänderstrecke (13) höhenverstellbar oder höhenverfahrbar ist.

9. Vorrichtung nach Anspruch 8, **dadurch gekennzeichnet, dass** die Bremseinrichtung (21) wenigstens eine Andruckrolle (22) aufweist und dass dem Übergabetisch (24) eine Bänderstrecke zugeordnet ist, die zusammen mit dem Übergabetisch (24) unabhängig von der Andruckrolle (22) verfahrbar ist, wobei, vorzugsweise, durch Höhenverstellung des Übergabetisches (24) ein Bremsspalt zwischen der Andruckrolle (22) und der Bänderstrecke (24) ausgebildet wird.

10. Vorrichtung nach einem der vorhergehenden Ansprüche, **dadurch gekennzeichnet, dass** zwischen dem Saugband (19) der Schuppeinrichtung (14) und der Bremseinrichtung (21) Saugelemente oberhalb der Bogentransportebene und/oder Blaselemente zum Anheben von freihängenden Bögen angeordnet sind.

11. Verfahren zur Bildung eines Schuppenstroms (2) von unter- oder überlappenden Bögen (3), insbesondere von Papier- oder Kartonbögen, weiter insbesondere zur Bildung eines Schuppenstroms (2) von mit einer Querschneideeinrichtung (9) aus einem Materialband (5) geschnittenen einzelnen Bögen (3), wobei vereinzelte Bögen (3) zu einer Schuppeinrichtung (14) transportiert und bereichsweise unter- oder überlappend werden, um einen Schuppenstrom (2) zu erzeugen, wobei die geschuppten Bögen (3) mit einer der Schuppeinrichtung (14) in Transportrichtung (X) der Bögen (3) nachfolgenden Bremseinrichtung (21) abgebremst werden, insbesondere ausgeführt mit einer Vorrichtung (1) nach einem der vorhergehenden Ansprüche, **dadurch gekennzeichnet, dass** die Schuppeinrichtung (14) bei einer Änderung der Schnittlänge der Bögen (3) in oder entgegen der Transportrichtung (X) der Bögen (3) verstellt wird und wobei der Abstand zwischen der Bremseinrichtung (21) und einem Übergabepunkt (25) zur Bogenübergabe an eine weiterverarbeitende Maschine bei einer Änderung der Schnittlänge der Bögen (3) konstant gehalten wird.

12. Verfahren nach Anspruch 11, **dadurch gekennzeichnet, dass** bei einem Systemstopp in der Schuppeinrichtung (14) ein Puffer für einen nachlaufenden Bogen (3) vorgesehen ist.

## Claims

1. Device (1), in particular cross cutter, for forming an imbricated stream (2) of underlapping or overlapping sheets (3), in particular of paper or cardboard sheets, with a transport device for transporting sheets (3), with an imbrication device (14) for overlapping or underlapping the sheets (3) in certain areas, with a braking device (21) following the shingling device (14) in the transport direction (X) of the sheets (3) for braking shingled sheets (3), in particular by forming a braking gap for the passage of sheets (3) brought together in a shingled manner, and, preferably, with a transverse cutting device (9), which is arranged upstream of the shingled device (14), for cutting a material strip (5) into individual sheets (3), **characterised in that** the shingling device (14) is constructed to be adjustable in and/or against the transport direction (X) of the sheets (3) in dependence on the cutting length, wherein the braking device (21) is designed to be non-adjustable in and/or against the transport direction (X) of the sheets (3) as a function of the cutting length and wherein the distance between the braking device (21) and the transverse cutting device (9) in the transport plane (Y) of the sheets (3) is the same for different cutting lengths.

2. Device (1) according to claim 1, **characterized in that** the shingling device (14) comprises a deceleration unit (16) and a lifting unit (15) and that the deceleration unit (16) and the lifting unit (15) are adjustable together.

3. Device (1), in particular cross cutter, for forming an imbricated stream (2) of underlapping or overlapping sheets (3), in particular of paper or cardboard sheets, having a transport device for transporting sheets (3), having an imbrication device (14) for overlapping or underlapping the sheets (3) in certain regions, having a braking device (21), downstream of the imbrication device (14) in the transport direction (X) of the sheets (3), for braking imbricated sheets (3), in particular by forming a braking gap for the passage of sheets (3) brought together in a shingled manner, and, preferably, with a transverse cutting device (9), mounted upstream of the shingling device (14), for cutting a material strip (5) into individual sheets (3), in particular according to one of the preceding claims, **characterized in that** the shingling device (14) is mounted in a chassis (30) which is designed such that it can be moved laterally with respect to the transport direction (X) of the sheets (3) relative to the transverse cutting device (9).

4. Device according to claim 3, **characterised in that** the fast-running conveyor belts (13) of the cross-cutting device (9) and the fast-running conveyor belts (13) of the overlapping direction (14) engage in one another in a comb-like manner.

5. Device according to claim 4, **characterised in that** the fast-running conveyor belts (13) of the cross-cutting device (9) and the fast-running conveyor belts (13) of the overlapping direction (14) are designed to be adjustable or movable in and against the transport direction (X) of the sheets (3).

6. Device according to claims 3 and 5, **characterised in that** the cross-cutting device (9) is designed or mounted so as to be non-movable transversely to the transport direction (X) of the sheets (3).

7. Device (1), in particular cross cutter, for forming an imbricated stream (2) of underlapping or overlapping sheets (3), in particular of paper or cardboard sheets, with a transport device for transporting sheets (3), with an imbrication device (14) for overlapping or underlapping the sheets (3) in certain areas, with a braking device (21) following the shingling device (14) in the transport direction (X) of the sheets (3) for braking shingled sheets (3), in particular by forming a braking gap for the passage of sheets (3) brought together in a shingled manner, and, preferably, with a transverse cutting device (9) upstream of the imbricated device (14) for cutting a material strip (5) into individual sheets (3), in particular according to one of the preceding claims, **characterized in that** a transfer table (24) is provided for transferring sheets to a sheet processing machine, and **in that** the transfer table (24) is mounted non-pivotably and is vertically adjustable in at least one linear or arcuate movement obliquely to the transport plane of the imbricated stream.

8. Device according to claim 7, **characterised in that** the braking device (21) is associated with a fast-moving belt path (13) and **in that** the transfer table (24) is associated with a slow-moving belt path (23), wherein the slow-moving belt path (23) together with the transfer table (24) is vertically adjustable or vertically displaceable independently of the fast-moving belt path (13).

9. Device according to claim 8, **characterised in that** the braking device (21) has at least one pressure roller (22) and **in that** the transfer table (24) is assigned a belt section which can be moved together with the transfer table (24) independently of the pressure roller (22), wherein, preferably, a braking gap is formed between the pressure roller (22) and the belt section (24) by height adjustment of the transfer table (24).

10. Device according to one of the preceding claims, **characterised in that** suction elements above the sheet transport plane and/or blower elements for lifting freely suspended sheets are arranged between the suction belt (19) of the shingling device (14) and the braking device (21).

11. Method for forming an imbricated stream (2) of underlapping or overlapping sheets (3), in particular of paper or cardboard sheets, further in particular for forming an imbricated stream (2) of individual sheets (3) cut from a material strip (5) by a transverse cutting device (9), wherein individual sheets (3) are transported to a shingling device (14) and are underlapped or overlapped in regions in order to produce an imbricated stream (2), wherein the imbricated sheets (3) are braked by a braking device (21) following the shingling device (14) in the transport direction (X) of the sheets (3), in particular carried out with a device (1) according to one of the preceding claims, **characterised in that** the shingling device (14) is adjusted in or against the transport direction (X) of the sheets (3) in the event of a change in the cut length of the sheets (3) and wherein the distance between the braking device (21) and a transfer point (25) for sheet transfer to a machine for further processing is kept constant in the event of a change in the cut length of the sheets (3).

12. Method according to claim 11, **characterised in that** a buffer for a trailing sheet (3) is provided in the shingling device (14) in the event of a system stop.

## Revendications

1. Dispositif (1), notamment coupeuse transversale, pour former un flux imbriqué (2) de feuilles (3) se chevauchant par le haut ou par le bas, notamment de feuilles de papier ou de carton, comprenant un dispositif de transport pour transporter les feuilles (3), un dispositif d'imbrication (14) destiné à faire se chevaucher partiellement par le haut ou par le bas les feuilles (3), un dispositif de freinage (21) en aval du dispositif d'imbrication (14) dans la direction de transport (X) des feuilles (3) pour freiner les feuilles (3) imbriquées, notamment en formant une fente de freinage destinée au passage des feuilles (3) réunies de manière imbriquée, et, de préférence, un dispositif de coupe transversale (9) en amont du dispositif d'imbrication (14) pour couper une bande de matériau (5) en feuilles individuelles (3), **caractérisé en ce que** le dispositif d'imbrication (14) est conçu pour être réglé en fonction de la longueur de coupe dans et/ou à l'encontre de la direction de transport (X) des feuilles (3), le dispositif de freinage (21) étant conçu de manière à ne pas être réglé en fonction de la longueur de coupe dans et/ou à l'encontre de la direction de transport (X) des feuilles (3) et la distance entre le dispositif de freinage (21) et le dispositif de coupe transversale (9) demeurant identique lorsque les longueurs de coupe sont différentes dans le plan de transport (Y) des feuilles (3).

2. Dispositif (1) selon la revendication 1, **caractérisé en ce que** le dispositif d'imbrication (14) comporte une unité de retard (16) et une unité de levage (15) et **en ce que** l'unité de retard (16) et l'unité de levage (15) peuvent être réglées ensemble.

3. Dispositif (1), notamment coupeuse transversale, pour former un flux imbriqué (2) de feuilles (3) se chevauchant par le haut ou par le bas, notamment de feuilles de papier ou de carton, comprenant un dispositif de transport pour transporter les feuilles (3), un dispositif d'imbrication (14) destiné à faire se chevaucher partiellement par le haut ou par le bas les feuilles (3), un dispositif de freinage (21) en aval du dispositif d'imbrication (14) dans la direction de transport (X) des feuilles (3) pour freiner les feuilles (3) imbriquées, notamment en formant une fente de freinage destinée au passage des feuilles (3) réunies de manière imbriquée, et, de préférence, un dispositif de coupe transversale (9) monté en amont du dispositif d'imbrication (14) pour couper une bande de matériau (5) en feuilles individuelles (3), notamment selon l'une quelconque des revendications précédentes, **caractérisé en ce que** le dispositif d'imbrication (14) est monté dans un châssis (30) qui est conçu pour se déplacer latéralement par rapport à la direction de transport (X) des feuilles (3) par rapport au dispositif de coupe transversale (9).

4. Dispositif selon la revendication 3, **caractérisé en ce que** les bandes transporteuses rapides (13) du dispositif de coupe transversale (9) et les bandes transporteuses rapides (13) du dispositif d'imbrication (14) s'engrènent comme un peigne.

5. Dispositif selon la revendication 4, **caractérisé en ce que** les bandes transporteuses rapides (13) et/ou les bandes transporteuses lentes du dispositif de coupe (9) et les bandes transporteuses rapides (13) du dispositif d'imbrication (14) sont conçues pour être réglables ou mobiles dans et à l'encontre de la direction de transport (X) des feuilles (3).

6. Dispositif selon les revendications 3 et 5, **caractérisé en ce que** le dispositif de coupe transversale (9) est conçu ou monté de manière à ne pas pouvoir se déplacer transversalement à la direction de transport (X) des feuilles (3).

7. Dispositif (1), notamment coupeuse transversale pour former un flux imbriqué (2) de feuilles (3) se chevauchant par le haut ou par le bas, notamment de feuilles de papier ou de carton, comprenant un dispositif de transport pour transporter les feuilles (3), un dispositif d'imbrication (14) destiné à faire se chevaucher partiellement par le haut ou par le bas les feuilles (3), un dispositif de freinage (21) en aval du dispositif d'imbrication (14) dans la direction de transport (X) des feuilles (3) pour freiner les feuilles (3) imbriquées, notamment en formant une fente de freinage destinée au passage des feuilles (3) réunies de manière imbriquée, et, de préférence, un dispositif de coupe transversale (9) monté en amont du dispositif d'imbrication (14) pour couper une bande de matériau (5) en feuilles individuelles (3), notamment selon l'une quelconque des revendications précédentes, **caractérisé en ce qu'**une table de transfert (24) est destinée au transfert des feuilles vers une machine de traitement de feuilles et **en ce que** la table de transfert (24) est montée de manière non pivotante et est réglable en hauteur dans au moins un mouvement linéaire ou arqué obliquement par rapport au plan de transport du flux imbriqué.

8. Dispositif selon la revendication 7, **caractérisé en ce que** le dispositif de freinage (21) est associé à une section de bandes rapides (13) et **en ce qu'**à la table de transfert (24) est associée une section de bandes lentes (23), la section de bandes lentes (23), conjointement avec la table de transfert (24), pouvant être réglée en hauteur ou déplacée en hauteur indépendamment de la section de bandes rapides (13).

9. Dispositif selon la revendication 8, **caractérisé en ce que** le dispositif de freinage (21) comporte au moins un galet presseur (22) et **en ce qu'**à la table de transfert (24) est associée une section de bandes qui peut être déplacée conjointement avec la table de transfert (24) indépendamment du galet presseur (22), de préférence, par réglage de la hauteur de la table de transfert (24), un espace de freinage étant formé entre le galet presseur (22) et la section de bandes (24).

10. Dispositif selon l'une quelconque des revendications précédentes, **caractérisé en ce qu'**entre le tapis d'aspiration (19) du dispositif d'imbrication (14) et le dispositif de freinage (21) sont disposés des éléments d'aspiration au-dessus du plan de transport de feuille et/ou des éléments de soufflage pour soulever les feuilles volantes.

11. Procédé de formation d'un flux imbriqué (2) de feuilles (3) se chevauchant par le haut ou par le bas, notamment de feuilles de papier ou de carton, plus particulièrement pour former un flux imbriqué (2) de feuilles individuelles (3) coupées dans une bande de matériau (5) au moyen d'un dispositif de coupe transversale (9), dans lequel les feuilles individuelles (3) sont transportées vers un dispositif d'imbrication (14) et se chevauchent par le haut ou par le bas dans certaines zones afin de produire un flux imbriqué (2), les feuilles imbriquées (3) étant freinées au moyen d'un dispositif de freinage (21) en aval du dispositif d'imbrication (14) dans la direction de transport (X) des feuilles (3), notamment sorties au moyen d'un dispositif (1) selon l'une quelconque des revendications précédentes, **caractérisé en ce que** le dispositif d'imbrication (14) est réglé lors du changement de longueur de coupe des feuilles (3) dans ou à l'encontre de la direction de transport (X) des feuilles (3) et la distance entre le dispositif de freinage (21) et un point de transfert (25) pour le transfert de feuilles vers une machine de transformation étant maintenue constante lors d'un changement de la longueur de coupe des feuilles (3).

12. Procédé selon la revendication 11, **caractérisé en ce qu'**un tampon pour une feuille (3) retardée est prévu dans le dispositif d'imbrication (14) lorsque le système s'arrête.
